# EUROPÄISCHE PATENTSCHRIFT

(11) **EP 2 678 369 B1**
(45) Veröffentlichungstag und Bekanntmachung des Hinweises auf die Patenterteilung: **06.05.2015**
(21) Anmeldenummer: 12705846.9
(22) Anmeldetag: 23.02.2012
(51) Int. Cl.: C08G 59/40, C08G 18/06, C08L 63/00, C08G 59/44, C08G 59/46

(54) **HOCHLATENTE HÄRTER FÜR EPOXIDHARZE**
HIGH-LATENCY HARDENERS FOR EPOXY RESINS
DURCISSEURS HAUTEMENT LATENTS POUR RÉSINES ÉPOXYDES

(30) Priorität: 23.02.2011 DE 102011012079; 17.01.2012 DE 102012000674
(43) Veröffentlichungstag der Anmeldung: 01.01.2014
(73) Patentinhaber: AlzChem AG, 83308 Trostberg (DE)
(72) Erfinder: STROBEL, Sylvia, 84518 Garching (DE); EBNER, Martin, 86438 Kissing (DE); KRIMMER, Hans-Peter, 84558 Kirchweidach (DE); BRANDL, Monika, 83342 Tacherting (DE)
(74) Vertreter: Weickmann & Weickmann
(86) Internationale Anmeldenummer: PCT/EP2012/053091
(87) Internationale Veröffentlichungsnummer: WO 2012/113878

(56) Entgegenhaltungen:
- EP-A2- 0 204 658
- AT-B- 351 772
- DE-A1- 2 743 015

## Beschreibung

Die vorliegende Erfindung betrifft neuartige hochlatente flüssige Härter zur Härtung von härtbaren Polymerharzen, insbesondere von Epoxidharzen, sowie Epoxidharz-Zusammensetzungen umfassend diese hochlatenten Härter für die Herstellung von Faserverbundwerkstoffen.

Die Verwendung von duroplastischen Epoxidharzen ist aufgrund ihrer guten Chemikalienbeständigkeit, ihrer sehr guten thermischen und dynamisch-mechanischen Eigenschaften sowie ihres hohen elektrischen Isolationsvermögens weit verbreitet. Darüber hinaus zeigen Epoxidharze eine gute Haftung auf vielen Substraten und sind somit bestens für den Einsatz in Faserverbundwerkstoffen (Composites) geeignet. Für den Einsatz in Faserverbundwerkstoffen sind sowohl eine gute Benetzung der Faser, d. h. eine niedrige Viskosität der gewählten Harzformulierung zur Compositherstellung als auch hohe mechanische Eigenschaften nach Aushärtung wünschenswert.

Zur Herstellung von Formteilen aus Faserverbundwerkstoffen werden verschiedene Verfahren genutzt, wie bspw. das Prepregverfahren, verschiedene Infusions- oder Injektionsverfahren, hierbei insbesondere das RTM-Verfahren (Resin Transfer Molding). Von diesen Verfahren haben insbesondere die Infusions- oder Injektionsverfahren in den letzten Jahren an Bedeutung gewonnen. So werden beispielsweise in den Infusionsverfahren, in einem offenen Werkzeug befindliche trockene Verstärkungsmaterialien, wie beispielsweise Fasermatten, Vliesstoffe, Gewebe oder Gewirke, mit einer dichten Vakuumfolie abgedeckt und nach Anlegen des Vakuums über Verteilerkanäle mit Harzformulierungen getränkt. Diese Verfahren weisen den Vorteil auf, dass große Elemente mit komplizierten Geometrien in kurzer Zeit geformt werden können.

Die Epoxidharzformulierung für ein Infusions- oder Injektionsverfahren muss eine niedrige Viskosität aufweisen, um die Imprägnierung der Fasermaterialien im Vakuum in entsprechender Zeit zu ermöglichen. Werden Harzformulierungen mit zu hohen Viskositäten verwendet oder werden Harzformulierungen verwendet, die während der Injektionsperiode zu schnell zu hohe Viskositäten erzeugen, werden unimprägnierte Teile und sonstige Fehlstellen im entstehenden Composit erhalten.

Die Härtung von Epoxidharzen verläuft nach unterschiedlichen Mechanismen. Neben der Härtung mit Phenolen oder Anhydriden wird häufig die Härtung mit Aminen durchgeführt. Diese Stoffe sind meist flüssig und lassen sich sehr gut mit Epoxidharzen vermengen. Aufgrund der hohen Reaktivität und damit sehr niedrigen Latenz werden derartige Epoxidharz-Zusammensetzungen zweikomponentig ausgeführt. Dies bedeutet, dass Harz (A-Komponente) und Härter (B-Komponente) getrennt aufbewahrt werden und erst kurz vor Gebrauch im korrekten Verhältnis gemischt werden. Hierbei bedeutet "latent", dass eine Mischung der Einzelkomponenten unter definierten Lagerbedingungen stabil vorliegt. Diese zweikomponentigen Harzformulierungen werden auch als sogenannte kalthärtende Harzformulierungen bezeichnet, wobei die dafür verwendeten Härter meist aus der Gruppe der Amine oder Amidoamine gewählt werden.

Einkomponentige, heißhärtende Epoxidharzformulierungen sind hingegen gebrauchsfähig fertig vorkonfektioniert, das heißt, dass Epoxidharz und Härter werkseitig vermischt vorliegen. Mischungsfehler der Einzelkomponenten bei Gebrauch vor Ort sind daher ausgeschlossen. Voraussetzung dafür bilden latente Härtersysteme, welche bei Raumtemperatur mit dem Epoxidharz nicht reagieren (lagerfähig sind), jedoch unter Erwärmung je nach Energieeintrag bereitwillig ausreagieren. Für solche einkomponentigen Epoxidharz-Formulierungen ist beispielsweise Dicyandiamid ein besonders geeigneter und auch kostengünstiger Härter. Unter Umgebungsbedingungen können entsprechende Harz-Härter-Mischungen bis zu zwölf (12) Monaten gebrauchsfähig gelagert werden.

Leider weisen diese Epoxidharzmischungen mit hoch latentem Dicyandiamid oder anderen hoch latenten Härtern den Nachteil auf, dass die Härter in Epoxidharzen nur wenig löslich sind und im Infusions- oder Injektionsverfahren zur Herstellung von Faserverbundwerkstoffen an den Einlassstellen für das Harz von den Fasermatten festgehalten und herausgefiltert werden. Somit wird eine vor Anwendung homogene Mischung des Härters in den Harzen im Composit unterbunden. Hierdurch wird eine Aushärtung des gesamten Composits verhindert.

Der vorliegenden Erfindung lag daher die Aufgabe zugrunde, neuartige Stoffe, Gemische oder Härter zur Härtung von härtbaren Polymerharzen, insbesondere Epoxidharze sowie Epoxidharz-Zusammensetzungen, bereitzustellen, die zur Herstellung von Composits und faserverstärkten Matrices verwendet werden können. Hierbei bestand weiterhin die Notwendigkeit, dass solche Härter die Vorteile der bekannten Aminhärter und der bekannten Dicyandiamid-Pulverhärter in sich vereinen, ohne deren Nachteile, wie geringe Latenz oder Filtration der Partikel zu übernehmen. Diese neuen Härter sollen eine hohe Latenz somit eine hohe Lagerstabilität unterhalb der Härtungstemperatur sowie eine hohe Reaktivität bei der Härtungstemperatur aufweisen, eine vollständig Vernetzung des Epoxidharzes ermöglichen, in Epoxidharzen löslich oder vollständig mischbar sein und zum Einsatz in Infusions-, Injektions- oder RTM-Verfahren geeignet sein.

Gelöst werden diese Aufgaben durch flüssige Härter gemäß Anspruch 1 und Polymerharz-Zusammensetzungen gemäß Anspruch 8 und 9. Damit ist gemäß einer ersten Ausführung ein flüssiger Härter zur Härtung von Polymerharzen, insbesondere von härtbaren Polymerharzen Gegenstand der vorliegenden Erfindung, der a) Cyanamid, b) mindestens ein Harnstoffderivat der Formel (I) oder Formel (II) und c) mindestens einen Stabilisator ausgewählt aus der Gruppe der anorganischen oder organischen Säuren umfasst, wobei die Harnstoffderivate folgende Struktur aufweisen 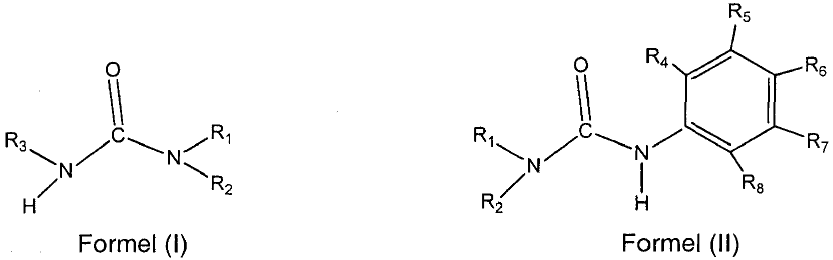 wobei für die Reste jeweils gleichzeitig oder unabhängig voneinander gilt:
R¹, R² = gleichzeitig oder unabhängig voneinander Wasserstoff, C1- bis C15-Alkyl, C3- bis C15-Cycloalkyl oder gemeinsam unter Bildung eines Ringes C3- bis C10-Alkylen;
R³ = Wasserstoff, C1- bis C15-Alkyl, C3- bis C15-Cycloalkyl, Aryl, Arylalkyl,
   mit -NHC(O)NR¹R² substituiertes C1- bis C15-Alkyl, mit-NHC(O)NR¹R² substituiertes C3- bis C15-Cycloalkyl,
   mit -NHC(O)NR¹R² substituiertes Aryl oder
   mit -NHC(O)NR¹R² substituiertes Arylalkyl;
R⁴, R⁵, R⁶, R⁷, R⁸ = gleichzeitig oder unabhängig voneinander Wasserstoff, Halogen, C1- bis C15-Alkyl, C3- bis C15-Cycloalkyl, Aryl, Arylalkyl, -CF₃, -NHC(O)NR¹R²,
   mit -NHC(O)NR¹R² substituiertes C1- bis C15-Alkyl,
   mit -NHC(O)NR¹R² substituiertes Aryl oder
   mit -NHC(O)NR¹R² substituiertes Arylalkyl.

Überraschenderweise wurde gefunden, dass intensive Vermischungen von Cyanamid und mindestens einem Harnstoffderivat gemäß Formel (I) oder Formel (II) mit den oben angegebenen Bedeutungen flüssige bis semiflüssige Gemische mit niedrigen Schmelzpunkten (im Vergleich zu den Ausgangsstoffen) ergeben, die sich bei Raumtemperatur vollständig in Epoxidharz lösen bzw. vollständig mischen. Obwohl analytisch nach wie vor separate Stoffe vorliegen, zeigen DSC-Analysen endotherme Schmelzpeaks von Einstoffsystemen. Diese Gemische sind hervorragend zur Härtung von härtbaren Polymerharzen geeignet. Ihre Wirkungsweise im Epoxidharz ist vergleichbar zu den Härtungseigenschaften von mit Imidazolen beschleunigten Dicyandiamid und liegt bei < 100 °C. Trotzdem bleibt bei Raumtemperatur eine Latenz von mehreren Tagen bis mehreren Wochen erhalten.

Überraschenderweise hat sich zudem gezeigt, dass erfindungsgemäße flüssige Härter im Vergleich zu Pulvermischungen gleicher Zusammensetzung durchweg bei niedrigeren Temperaturen eine Härtung der Polymerharze initiieren und somit eine kürzere Zeit zur Herstellung von Formteilen ermöglichen. Zudem wird durch die erfindungsgemäßen flüssigen Härter die Viskosität der fertig formulierten Harze, insbesondere von Epoxidharz-Zusammensetzungen, erniedrigt, wodurch diese Härter für den Einsatz in Infusionsharzen hervorragend geeignet sind, insbesondere da eine erhebliche Zeitersparnis zur Herstellung von Formteilen ermöglicht wird. Hervorzuheben ist dabei, dass die üblichen Nachteile von sonstigen flüssigen Härtern, wie eine sehr niedrige Latenz und somit sehr hohe Reaktivität bereits bei Raumtemperatur, nicht beobachtet wird. Zudem können mit dem erfindungsgemäßen Härter gehärtete Harze mit im Vergleich zu Aminhärtern gehärteten Harzen hohe Glasübergangstemperaturen bereitgestellt werden.

Weiterhin überraschend konnte festgestellt werden, dass eine besonders hohe Latenz und damit hohe Lagerstabilität der Härter selbst als auch von Epoxidharz-Zusammensetzungen, die diese Härter umfassen, eingestellt werden kann, wenn den Gemischen bzw. den Härtern ein Stabilisator aus der Gruppe der anorganischen oder organischen Säuren hinzugefügt wird. Durch das Hinzufügen von Stabilisatoren aus der Gruppe der anorganischen oder organischen Säuren konnte die Latenz verdoppelt, in einigen Fällen sogar verdreifacht werden. Hierbei werden gleichzeitig die hervorragenden Härtungseigenschaften, wie beispielsweise die hohe Reaktivität bei der Härtungstemperatur, im Vergleich zu den Härtern ohne Stabilisatoren beibehalten.

Insgesamt kann somit ein Härter zur Verfügung gestellt werden, der aufgrund seiner Viskositätserniedrigung und der hohen Latenz in den Polymerharz-Zusammensetzungen sowie der hohen Reaktivität in den Polymerharz-Zusammensetzungen bei der Härtungstemperatur hervorragend für den Einsatz in Infusions- oder Injektionsverfahren geeignet ist.

In Weiterbildung der vorliegenden Erfindung kann dabei vorgesehen sein, dass der flüssige Härter Cyanamid und mindestens ein Harnstoffderivat der Formel (I) oder Formel (II) oder Mischungen dieser Harnstoffderivate in einem molaren Verhältnis Cyanamid : Harnstoffderivat oder Harnstoffderivatmischung von 1 : 1 bis 4 : 1 umfasst.

Insbesondere ist gemäß der vorliegenden Erfindung vorgesehen, dass das molare Verhältnis Cyanamid : Harnstoffderivat oder Harnstoffderivatmischung 1 : 1 bis 3 :1 und weiterhin bevorzugt 1 : 1 bis 2 : 1 und ganz bevorzugt 2 : 1 bis 4 : 1 beträgt.

In Gegenwart eines Stabilisators können die molaren Verhältnisse von Cyanamid : Harnstoffderivat aber auch außerhalb des bevorzugten Bereichs von 1 : 1 bis 4 : 1 liegen. Beispielsweise sind molare Verhältnisse von Cyanamid : Harnstoffderivat von 0,1 bis < 1 : 1, insbesondere von 0,2 bis < 1 : 1, möglich, aber auch molare Verhältnisse von Cyanamid : Harnstoffderivat von > 4 : 1 bis 20 :1, insbesondere > 4 : 1 bis 10 : 1.

Dabei soll unter einem flüssigen Härter gemäß der vorliegenden Erfindung ein Härter verstanden sein, der einen Schmelzpunkt Sₘ mit Sₘ < 20 °C (Normaldruck) aufweist oder bei einer Temperatur von 20 °C (Normaldruck) flüssig vorliegt und eine Viskosität von weniger als 1 Pa*s aufweist. Die erfindungsgemäßen flüssigen Gemische oder Härter weisen vorzugsweise eine Viskosität von ≤ 100 mPa*s, mehr bevorzugt von < 20 mPa*s und noch mehr bevorzugt von ≤ 12 mPa*s bei 25 °C auf. Besonders bevorzugt sind jedoch solche flüssigen Gemische oder flüssigen Härter, die einen Schmelzpunkt Sₘ mit Sₘ < 10 °C (Normaldruck), ganz besonders bevorzugt einen Schmelzpunkt Sₘ mit Sₘ < 0 °C (Normaldruck), aufweisen oder bei einer Temperatur von 10 °C (Normaldruck), ganz besonders bevorzugt bei einer Temperatur von 0 °C (Normaldruck), flüssig vorliegen und eine Viskosität von weniger als 1 Pa*s aufweisen.

Hervorzuheben ist hierbei, dass diese Härter als solche flüssig sind und insbesondere neben Cyanamid, mindestens einem Harnstoffderivat oder Mischungen hiervon und einem Stabilisator kein Lösemittel oder Lösungsvermittler umfassen und somit lösemittelfrei oder lösungsvermittlerfrei sind. Dabei ist im Zusammenhang mit der vorliegenden Erfindung unter einem Lösemittel oder Lösungsvermittler jedwedes anorganische oder organische Lösemittel oder Lösungsmittel oder Lösungsvermittler oder Mischungen hiervon zu verstehen, das/der bei der chemischen Synthese oder in der Analytik zur Herstellung einer Lösung verwendet wird. Als lösemittelfrei oder lösungsvermittlerfrei wird im Zusammenhang mit der vorliegenden Erfindung ein Härter verstanden, der im Wesentlichen frei von Lösemitteln oder Lösungsvermittlern ist und herstellungsbedingt höchstens 1,0 Gew.-% Lösemittel oder Lösungsvermittler enthält.

In einer alternativen Ausführungsform ist es aber auch möglich, dass die Härter ein Lösungsmittel, insbesondere Wasser enthalten. Die Zugabe von Lösungsmittel ist dabei nicht erforderlich, um die Gemische flüssig zu machen, sondern kann aus anderen verfahrenstechnischen Erfordernissen günstig sein.

Weiterhin soll im Zusammenhang mit der vorliegenden Erfindung unter C1- bis C15-Alkyl ein linearer oder verzweigter Alkylrest mit einer Kettenlänge bis zu 15 Kohlenstoffatomen verstanden sein, der insbesondere die allgemeinen Formel CₙH₂ₙ₊₁ aufweist, wobei n = 1 bis 15 bedeuted. Dabei ist insbesondere vorgesehen, dass C1- bis C15-Alkyl Methyl, Ethyl, Propyl, Butyl, Pentyl, Hexyl, Heptyl, Octyl, Nonyl oder Decyl bedeutet, wobei diese Alkylreste weiterhin bevorzugt auch unverzweigt, einfach verzweigt, mehrfach verzweigt oder alkylsubstituiert sein können.

Bevorzugt sind solche C1- bis C15-Alkylreste, die ihrerseits einfach oder mehrfach alkylsubstituiert, insbesondere mit C1- bis C5-Alkyl substituiert sind. C1- bis C5-Alkyl gemäß der vorliegenden Erfindung kann weiterhin bevorzugt Methyl, Ethyl, n-Propyl, 1-Methylethyl, n-Butyl, 1-Methylpropyl, 2-Methylpropyl, 1,1-Dimethylethyl, n-Pentyl, 1-Methylbutyl, 2-Methylbutyl, 3-Methylbutyl, 1,1-Dimethylpropyl, 1,2-Dimethylpropyl, 2,2-Dimethylpropyl oder 1-Ethylpropyl bedeuten. Damit kann C1- bis C15-Alkyl gemäß der vorliegenden Erfindung insbesondere auch 1-Methylethyl, 1-Methylpropyl, 1-Methylbutyl, 1-Methylpentyl, 1-Methylhexyl, 1-Methylheptyl, 1-Methyloctyl, 1-Methylnonyl, 1-Methyldecanyl, 1-Ethylpropyl, 1-Ethylbutyl, 1-Ethylpentyl, 1-Ethylhexyl, 1-Ethylheptyl, 1-Ethyloctyl, 1-Ethylnonyl, 1-Ethyldecanyl, 2-Methylpropyl, 2-Methylbutyl, 2-Methylpentyl, 2-Methylhexyl, 2-Methylheptyl, 2-Methyloctyl, 2-Methylnonyl, 2-Methyldecanyl, 2-Ethylpropyl, 2-Ethylbutyl, 2-Ethylpentyl, 2-Ethylhexyl, 2-Ethylheptyl, 2-Ethyloctyl, 2-Ethylnonyl, 2-Ethyldecanyl, 1,1-Dimethylethyl, 1,1-Dimethylpropyl, 1,1-Dimethylbutyl, 1,1-Dimethylpentyl, 1,1-Dimethylhexyl, 1,1-Dimethylheptyl, 1,1-Dimethyloctyl, 1,1-Dimethylnonyl, 1,1-Dimethyldecanyl, 1,2-Dimethylpropyl, 1,2-Dimethylbutyl, 1,2-Dimethylpentyl, 1,2-Dimethylhexyl, 1,2-Dimethylheptyl, 1,2-Dimethyloctyl, 1,2-Dimethylnonyl, 1,2-Dimethyldecanyl, 2-Ethyl-1-methylbutyl, 2-Ethyl-1-methylpentyl, 2-Ethyl-1-methylhexyl, 2-Ethyl-1-methylheptyl, 2-Ethyl-1-methyloctyl, 2-Ethyl-1-methylnonyl, 2-Ethyl-1-methyldecanyl, 1-Ethyl-2-methylpropyl, 1-Ethyl-2-methylbutyl, 1-Ethyl-2-methylpentyl, 1-Ethyl-2-methylhexyl, 1-Ethyl-2-methylheptyl, 1-Ethyl-2-methyloctyl, 1-Ethyl-2-methylnonyl oder 1-Ethyl-2-methyldecanyl bedeuten.

Weiterhin bevorzugt kann ein C1- bis C15-Alkylrest, insbesondere Methyl, Ethyl, Propyl, Butyl, seinerseits auch mit einem C3- bis C15-Cycloalkylrest substituiert sein, wobei C3- bis C15-Cycloalkyl die unten wiedergegebene Bedeutung aufweist. Damit kann C1-bis C15-Alkyl insbesondere auch C3- bis C15-Cycloalkyl-methyl, 1-(C3- bis C15-Cycloalkyl)-1-ethyl, 2-(C3- bis C15-Cycloalkyl)-1-ethyl, 1-(C3- bis C15-Cycloalkyl)-1-propyl, 2-(C3- bis C15-Cycloalkyl)-1-propyl oder 3-(C3- bis C15-Cycloalkyl)-1-propyl bedeuten, wobei C3- bis C15-Cycloalkyl die unten wiedergegeben Beutung aufweist.

Im Zusammenhang mit der vorliegenden Erfindung soll unter C3- bis C15-Cycloalkyl ein monocyclischer oder bicyclischer Cycloalkylrest mit 3 bis 15 Kohlenstoffatomen verstanden sein, insbesondere ein Cycloalkylrest, der die allgemeinen Formel CₙH₂ₙ₋₁ mit n = 3 bis 15 aufweist. Weiterhin bevorzugt kann C3- bis C15-Cycloalkyl Cyclopropyl, Cyclobutyl, Cyclopentyl, Cyclohexyl oder Cycloheptyl bedeuten, wobei diese Cycloalkylreste ihrerseits weiterhin bevorzugt einfach oder mehrfach mit C1- bis C5-Alkylresten der oben wiedergegebenen Bedeutung substituiert sein können. Weiterhin bevorzugt kann damit C3- bis C15-Cycloalkyl auch 1-Methyl-1-Cyclopropyl, 1-Methyl-1-Cyclobutyl, 1-Methyl-1-Cyclopentyl, 1-Methyl-1-Cyclohexyl, 1-Methyl-1-Cycloheptyl, 2-Methyl-1-Cyclopropyl, 2-Methyl-1-Cyclobutyl, 2-Methyl-1-Cyclopentyl, 2-Methyl-1-Cyclohexyl, 2-Methyl-1-Cycloheptyl, 3-Methyl-1-Cyclobutyl, 3-Methyl-1-Cyclopentyl, 3-Methyl-1-Cyclohexyl, 3-Methyl-1-Cycloheptyl, 4-Methyl-1-Cyclohexyl, 4-Methyl-1-Cycloheptyl, 1,2-Dimethyl-1-Cyclopropyl, 2,2-Dimethyl-1-Cyclopropyl, 2,3-Dimethyl-1-Cyclopropyl, 1,2-Dimethyl-1-Cyclobutyl, 1,3-Dimethyl-1-Cyclobutyl, 2,2-Dimethyl-1-Cyclobutyl, 2,3-Dimethyl-1-Cyclobutyl, 2,4-Dimethyl-1-Cyclobutyl, 3,3-Dimethyl-1-Cyclobutyl, 1,2-Dimethyl-1-Cyclopentyl, 1,3-Dimethyl-1-Cyclopentyl, 2,2-Dimethyl-1-Cyclopentyl, 2,3-Dimethyl-1-Cyclopentyl, 2,4-Dimethyl-1-Cyclopentyl, 2,5-Dimethyl-1-Cyclopentyl, 3,3-Dimethyl-1-Cyclopentyl, 3,4-Dimethyl-1-Cyclopentyl, 1,2-Dimethyl-1-Cyclohexyl, 1,3-Dimethyl-1-Cyclohexyl, 1,4-Dimethyl-1-Cyclohexyl, 1,5-Dimethyl-1-Cyclohexyl, 1,6-Dimethyl-1-Cyclohexyl, 2,2-Dimethyl-1-Cyclohexyl, 2,3-Dimethyl-1-Cyclohexyl, 2,4-Dimethyl-1-Cyclohexyl, 2,5-Dimethyl-1-Cyclohexyl, 2,6-Dimethyl-1-Cyclohexyl, 3,3-Dimethyl-1-Cyclohexyl, 3,4-Dimethyl-1-Cyclohexyl, 3,5-Dimethyl-1-Cyclohexyl, 3,6-Dimethyl-1-Cyclohexyl, 4,4-Dimethyl-1-Cyclohexyl, 1,2,2-Trimethyl-1-Cyclopropyl, 1,2,3-Trimethyl-1-Cyclopropyl, 1,2,2-Trimethyl-1-Cyclobutyl, 1,3,3-Trimethyl-1-Cyclobutyl, 1,2,3-Trimethyl-1-Cyclobutyl, 2,2,3-Trimethyl-1-Cyclobutyl, 2,2,4-Trimethyl-1-Cyclobutyl, 1,2,2-Trimethyl-1-Cyclopentyl, 1,2,3-Trimethyl-1-Cyclopentyl, 1,2,4-Trimethyl-1-Cyclopentyl, 1,2,5-Trimethyl-1-Cyclopentyl, 1,3,3-Trimethyl-1-Cyclopentyl, 1,3,4-Trimethyl-1-Cyclopentyl, 1,3,5-Trimethyl-1-Cyclopentyl, 2,2,3-Trimethyl-1-Cyclopentyl, 2,2,4-Trimethyl-1-Cyclopentyl, 2,2,5-Trimethyl-1-Cyclopentyl, 2,3,3-Trimethyl-1-Cyclopentyl, 2,3,4-Trimethyl-1-Cyclopentyl, 2,3,5-Trimethyl-1-Cyclopentyl, 2,3,3-Trimethyl-1-Cyclopentyl, 2,4,4-Trimethyl-1-Cyclopentyl, 2,4,5-Trimethyl-1-Cyclopentyl, 2,5,5-Trimethyl-1-Cyclopentyl, 3,3,4-Trimethyl-1-Cyclopentyl, 3,3,5-Trimethyl-1-Cyclopentyl, 3,4,5-Trimethyl-1-Cyclopentyl, 3,4,4-Trimethyl-1-Cyclopentyl', 1,2,2-Trimethyl-1-Cyclohexyl, 1,2,3-Trimethyl-1-Cyclohexyl, 1,2,4-Trimethyl-1-Cyclohexyl, 1,2,5-Trimethyl-1-Cyclohexyl, 1,2,6-Trimethyl-1-Cyclohexyl, 1,3,3-Trimethyl-1-Cyclohexyl, 1,3,4-Trimethyl-1-Cyclohexyl, 1,3,5-Trimethyl-1-Cyclohexyl, 1,3,6-Trimethyl-1-Cyclohexyl, 1,4,4-Trimethyl-1-Cyclohexyl, 2,2,3-Trimethyl-1-Cyclohexyl, 2,2,4-Trimethyl-1-Cyclohexyl, 2,2,5-Trimethyl-1-Cyclohexyl, 2,2,6-Trimethyl-1-Cyclohexyl, 2,3,3-Trimethyl-1-Cyclohexyl, 2,3,4-Trimethyl-1-Cyclohexyl, 2,3,5-Trimethyl-1-Cyclohexyl, 2,3,6-Trimethyl-1-Cyclohexyl, 2,4,4-Trimethyl-1-Cyclohexyl, 2,4,5-Trimethyl-1-Cyclohexyl, 2,4,6-Trimethyl-1-Cyclohexyl, 2,5,5-Trimethyl-1-Cyclohexyl, 2,5,6-Trimethyl-1-Cyclohexyl, 2,6,6-Trimethyl-1-Cyclohexyl, 3,3,4-Trimethyl-1-Cyclohexyl, 3,3,5-Trimethyl-1-Cyclohexyl, 3,3,6-Trimethyl-1-Cyclohexyl, 3,4,4-Trimethyl-1-Cyclohexyl, 3,4,5-Trimethyl-1-Cyclohexyl, 3,4,6-Trimethyl-1-Cyclohexyl, 3,5,6-Trimethyl-1-Cyclohexyl, 1,2,3,3-Tetramethyl-1-Cyclopropyl, 2,2,3,3-Tetramethyl-1-Cyclopropyl, 1,2,2,3-Tetramethyl-1-Cyclopropyl, 1,2,2,3-Tetramethyl-1-Cyclobutyl, 1,2,3,3-Tetramethyl-1-Cyclobutyl, 2,2,3,3-Tetramethyl-1-Cyclobutyl, 2,3,3,4-Tetramethyl-1-Cyclobutyl, 1,2,2,3-Tetramethyl-1-Cyclopentyl, 1,2,2,4-Tetramethyl-1-Cyclopentyl, 1,2,2,5-Tetramethyl-1-Cyclopentyl, 1,2,3,3-Tetramethyl-1-Cyclopentyl, 1,2,3,4-Tetramethyl-1-Cyclopentyl, 1,2,3,5-Tetramethyl-1-Cyclopentyl, 1,2,5,5-Tetramethyl-1-Cyclopentyl, 2,2,3,3-Tetramethyl-1-Cyclopentyl, 2,2,3,3-Tetramethyl-1-Cyclohexyl, 2,2,4,4-Tetramethyl-1-Cyclohexyl, 2,2,5,5-Tetramethyl-1-Cyclohexyl, 3,3,4,4-Tetramethyl-1-Cyclohexyl, 3,3,5,5-Tetramethyl-1-Cyclohexyl, 1-Ethyl-1-Cyclopropyl, 1-Ethyl-1-Cyclobutyl, 1-Ethyl-1-Cyclopentyl, 1-Ethyl-1-Cyclohexyl), 1-Ethyl-1-Cycloheptyl, 2-Ethyl-1-Cyclopropyl, 2-Ethyl-1-Cyclobutyl, 2-Ethyl-1-Cyclopentyl, 2-Ethyl-1-Cyclohexyl, 2-Ethyl-1-Cycloheptyl, 3-Ethyl-1-Cyclobutyl, 3-Ethyl-1-Cyclopentyl, 3-Ethyl-1-Cyclohexyl, 3-Ethyl-1-Cycloheptyl, 4-Ethyl-1-Cyclohexyl oder 4-Ethyl-1-Cycloheptyl bedeuten.

Gemäß der vorliegenden Erfindung kann R¹ und R² auch gemeinsam C3- bis C10-Alkylen bedeuten, wobei R¹ und R² gemeinsam mit dem Stickstoff des Harnstoffderivates einen stickstoffhaltigen Ring bilden. Insbesondere kann hierbei vorgesehen sein, dass R¹ und R² zusammen Ethylen, Propylen, Butylen, Pentylen oder Hexylen bedeuten, wobei diese Alkylenreste ihrerseits gegebenenfalls einfach oder mehrfach mit Alkylresten substituiert sein können. Dabei bildet R¹ und R² gemeinsam mit dem Stickstoff des Harnstoffderivates ein Aziridin, Azetidin, Azolidin, Azinan oder Azepan, das seinerseits gegebenenfalls einfach oder mehrfach mit C1- bis C5-Alkylresten der oben wiedergegebenen Bedeutung substituiert sein kann.

Gemäß der vorliegenden Erfindung bedeutet -NHC(O)NR¹R² ein 1-Ureayl-Rest, der am Stickstoff N3 mit den Resten R¹ und R² substituiert ist, wobei R¹ und R² die oben wiedergegebenen Bedeutungen aufweisen, und der über den Stickstoff N1 an einem Grundgerüst gebunden ist.

Halogen bedeutet gemäß der vorliegenden Erfindung insbesondere Fluor, Chlor oder Brom.

Gemäß der vorliegenden Erfindung bedeutet Aryl insbesondere einen aromatischen Aryl-Rest mit 3 bis 20 Kohlenstoffatomen, der weiterhin bevorzugt seinerseits (einfach oder mehrfach) mit einem C1- bis C5-Alkyl-Rest der oben wiedergegebenen Bedeutung substituiert sein kann. Besonders bevorzugt kann vorgesehen sein, dass als Aryl-Rest ein Benzolrest, Naphthalinrest, Anthracenrest oder Perylenrest verwendet wird, der seinerseits einfach oder mehrfach mit einem C1- bis C5-Alkyl-Rest der oben wiedergegebenen Bedeutung substituiert sein kann. Damit bedeutet Aryl insbesondere Toluyl, Xylenyl, Pseudocumolyl oder Mesitylenyl.

Gemäß der vorliegenden Erfindung bedeutet Arylalkyl ein C1- C15-Alkyl-Rest der oben wiedergegebene Bedeutung, der mit einem Aryl-Rest der oben wiedergegebenen Bedeutung substituiert ist. Insbesondere kann Arylalkyl einen Benzylrest bedeuten. Besonders bevorzugt umfassen erfindungsgemäße flüssige Härter oder Gemische mindestens ein aliphatisches Harnstoffderivat gemäß Formel (I). In diesen aliphatischen Harnstoffderivaten gemäß Formel (I) hat R¹ und R² die oben angegebene Bedeutung und R³ die Bedeutung Wasserstoff, C1- bis C15-Alkyl, C3- bis C15-Cycloalkyl, mit -NHC(O)NR¹R² substituiertes C1- bis C15-Alkyl oder mit -NHC(O)NR¹R² substituiertes C1- bis C15-Cycloalkyl.

Besonders bevorzugt umfassen die erfindungsgemäßen flüssigen Härter oder flüssigen Gemische mindestens ein Harnstoffderivat der Formel (I), in welchem mindestens einer der Reste R¹ und R² für einen Methylrest stehen. Besonders bevorzugt ist Methylharnstoff oder N,N-Dimethylharnstoff (also R¹ = R² = Methyl und R³ = H).

Weiterhin bevorzugt sind aliphatische Harnstoffderivate gemäß Formel (I), in welchen R¹ und R² die oben angegebene Bedeutung, insbesondere Wasserstoff, Methyl oder Ethyl, haben und R³ mit -NHC(O)NR¹R² substituiertes C1- bis C15-Cycloalkyl bedeutet.

Weiterhin bevorzugt sind flüssige Härter oder Gemische umfassend aliphatische Harnstoffderivate der Formel (III) 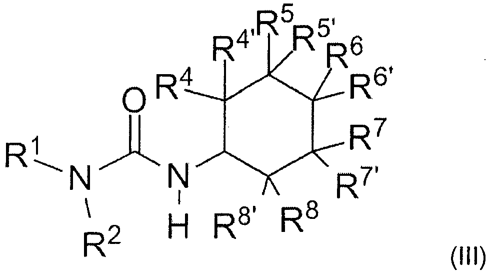 in welcher R¹, R², R⁴, R^{4'}, R⁵, R^{5'}, R⁶, R^{6'}, R⁷, R^{7'} und R⁸, R^{8'} die oben angegebenen Bedeutungen aufweisen und insbesondere gleichzeitig oder unabhängig voneinander bedeuten:
R¹, R² = gleichzeitig oder unabhängig voneinander Wasserstoff, C1- bis C15-Alkyl, C3- bis C15-Cycloalkyl oder gemeinsam unter Bildung eines Ringes C3- bis C10-Alkylen;
R⁴, R⁴, R⁵, R^{5'}, R⁶, R^{6'}, R⁷, R^{7'}, R⁸, R^{8'} = gleichzeitig oder unabhängig voneinander Wasserstoff,
   C1- bis C15-Alkyl,
   C3- bis C15-Cycloalkyl, -NHC(O)NR¹R² oder
   mit -NHC(O)NR¹R² substituiertes C1- bis C15-Alkyl.

Weiterhin bevorzugt sind flüssige Härter oder Gemische umfassend aliphatische Harnstoffderivate der Formel (III) in der R¹ und R² gleichzeitig oder unabhängig voneinander Wasserstoff oder Methyl und R⁴, R^{4'}, R⁵, R^{5'}, R⁶, R^{6'}, R⁷, R^{7'}, R⁸, R^{8'} gleichzeitig oder unabhängig voneinander Wasserstoff, Methyl, Ethyl, -NHC(O)NR¹R² oder mit -NHC(O)NR¹R² substituiertes Methyl oder Ethyl bedeuten. Besonders bevorzugt ist 1-(N,N-Dimethylurea)-3-(N,N-dimethylureamethyl)-3,5,5-trimethylcyclohexane (also R¹ = R² = R⁵ = R^{5'} = R⁷ = Methyl und R^{7'} = -CH₂-NHC(O)N(CH₃)₂ und R⁴ = R^{4'} = R⁶ = R^{6'} = R⁸ = R^{8'} = Wasserstoff).

Es kann jedoch auch vorgesehen sein, dass flüssige Härter oder Gemische der vorliegenden Erfindung aromatische Harnstoffderivate der Formel (II) umfassen. Von diesen aromatischen Harnstoffderivaten sind besonders bevorzugt solche Harnstoffderivate in welchen die Reste R⁴, R⁵, R⁶, R⁷ und R⁸ gleichzeitig oder unabhängig voneinander Wasserstoff, C1- bis C15-Alkyl, -NHC(O)NR¹R², mit -NHC(O)NR¹R² substituiertes C1- bis C15-Aryl oder mit -NHC(O)NR¹R² substituiertes C1- bis C15-Arylalkyl bedeuten.

Weiterhin bevorzugt sind flüssige Härter oder Gemische umfassend Harnstoffderivate der Formel (IV) 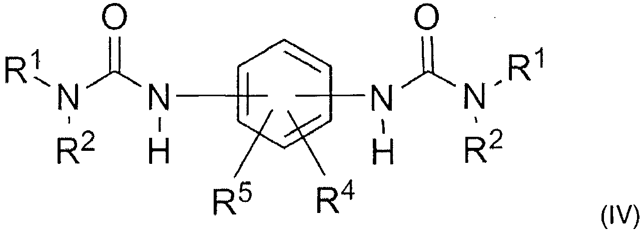 in welcher R¹, R², R⁴ und R⁵ die oben angegebenen Bedeutungen aufweisen und insbesondere gleichzeitig oder unabhängig voneinander Wasserstoff, C1-C15-Alkyl, darstellen. Bevorzugt bedeuten die Reste R¹ und R² in Zusammenhang mit der Formel (IV) ein Methylrest. Besonders bevorzugt ist 1,1'-(4-Methyl-m-phenylen)-bis-(3,3-dimethylharnstoff) und 1,1'-(2-Methyl-m-phenylen)-bis-(3,3-dimethylharnstoff) (also R¹= R² = R⁵ Methyl und R⁴ Wasserstoff).

Gemäß einer weiteren Ausführungsform kann insbesondere vorgesehen sein, dass die erfindungsgemäßen flüssigen Härter a) Cyanamid, b) zwei voneinander verschiedene Harnstoffderivate der Formel (I), Formel (II) oder der Formel (I) und Formel (II) enthalten und c) mindestens einen Stabilisator aus der Gruppe der anorganischen oder organischen Säuren umfasst, insbesondere enthält, wobei diese Härter weiterhin bevorzugt Cyanamid und zwei voneinander verschiedene Harnstoffderivate der Formel (I), Formel (II) oder der Formel (I) und Formel (II) in einem molaren Verhältnis Cyanamid : Harnstoffderivat bzw. Harnstoffderivat-Mischung von 1 : 1 bis 4 : 1 umfassen, insbesondere enthalten.

Besonders geeignet sind solche flüssigen Härter, die ein Harnstoffderivat der Formel (I) oder Formel (II) umfassen, wobei für die Reste R¹, R² gleichzeitig oder unabhängig voneinander Methyl oder Ethyl bedeutet.

Ganz besonders geeignet sind solche flüssigen Härter, die ein Harnstoffderivat der Formel (I) umfassen, wobei für die Reste gleichzeitig oder unabhängig voneinander gilt:
R¹, R² = Wasserstoff, C1- bis C15-Alkyl;
R³ = Wasserstoff, C1- bis C15-Alkyl, C3- bis C15-Cycloalkyl, mit -NHC(O)NR¹R² substituiertes C1- bis C15-Alkyl, mit -NHC(O)NR¹R² substituiertes C3- bis C15-Cycloalkyl, oder mit -NHC(O)NR¹R² substituiertes Aryl.

Somit sind insbesondere solche flüssigen Härter geeignet, die ein Harnstoffderivat der Formel (I) umfassen, wobei für die Reste gleichzeitig oder unabhängig voneinander gilt:
R¹, R² = gleichzeitig oder unabhängig voneinander Methyl oder Ethyl;
R³ = Wasserstoff, C1- bis C15-Alkyl, C3- bis C15-Cycloalkyl,
   mit -NHC(O)NR¹R² substituiertes C1- bis C15-Alkyl,
   mit -NHC(O)NR¹R² substituiertes C3- bis C15-Cycloalkyl, oder
   mit -NHC(O)NR¹R² substituiertes Aryl.

Gemäß einer weiteren Ausführung der Erfindung sind solche flüssigen Härter Gegenstand der Erfindung, die a) Cyanamid, b) mindestens ein Harnstoffderivat ausgewählt aus der Gruppe Harnstoff, 1,1-Dimethylharnstoff, 3-(3-Chlor-4-methylphenyl)-1,1-dimethylharnstoff, 3-(p-Chlorphenyl)-1,1-dimethylharnstoff, 3-Phenyl-1,1-dimethylharnstoff, 3-(3,4-Dichlorphenyl)-1,1-dimethylharnstoff, 1,1'-(Methylendi-p-phenylen)-bis-(3,3-dimethylharnstoff), 3-(3-Trifluoromethylphenyl)1,1-dimethylharnstoff, 1,1'-(2-Methyl-m-phenylen)-bis-(3,3-dimethylharnstoff) und/oder 1,1'-(4-Methyl-m-phenylen)-bis-(3,3-dimethylharnstoff) und c) mindestens einen Stabilisator aus der Gruppe der anorganischen oder organischen Säuren umfassen, insbesondere enthalten, wobei weiterhin bevorzugt Cyanamid und das Harnstoffderivat bzw. Harnstoffderivat-Mischung in einem molaren Verhältnis von 1 : 1 bis 4 : 1 eingesetzt werden.

Als Stabilisatoren umfassen erfindungsgemäße flüssige Härter erfindungswesentlich Stabilisatoren ausgewählt aus der Gruppe der anorganischen oder organischen Säuren. In einer bevorzugten Ausführungsform ist ein flüssiger Härter Gegenstand der vorliegnden Erfindung, der a) Cyanamid, b) mindestens ein Harnstoffderivat der Formel (I) oder Formel (II) und c) mindestens einen Stabilisator, ausgewählt aus der Gruppe der organischen Carbonsäuren, umfasst.

Des Weiteren ist eine Epoxidharz-Zusammensetzung Gegenstand der vorliegenden Erfindung, die a) ein Epoxidharz, b) mindestens einen flüssigen Härter der hierin beschriebenen Art und c) einen Stabilisator, ausgewählt aus der Gruppe der organischen Carbonsäuren, umfasst.

Als Stabilisatoren haben sich hierbei insbesondere aromatische und nichtaromatische Carbonsäuren, Dicarbonsäuren oder Tricarbonsäuren besonders geeignet gezeigt. Weiterhin bevorzugt können organische Säuren oder aromatische und nichtaromatische Carbonsäuren, Dicarbonsäuren oder Tricarbonsäuren eingesetzt werden aus der Gruppe Ameisensäure, Essigsäure, Propansäure, Maleinsäure, Malonsäure, Salicylsäure, Milchsäure, Zitronensäure, Oxalsäure, Adipinsäure, Benzoesäure, Phthalsäure, Alkyl-Sulfonsäuren, Arylsulfonsäuren, insbesondere Toluolsulfonsäure, oder deren Anhydride.

Es kann jedoch auch vorgesehen sein, dass erfindungsgemäße Härter als Stabilisator anorganische Säuren ausgewählt aus der Gruppe Salzsäure, Schwefelsäure, schweflige Säure, Phosphorsäure, phosphorige Säure, ortho-Phosphorsäure, Diphosphorsäure, Triphosphorsäure, Polyphosphorsäure, Salpetersäure oder deren Anhydride umfassen.

Gemäß einer weiteren vorteilhaften Ausbildung ist auch ein flüssiger Härter zur Härtung von härtbaren Polymerharzen Gegenstand der vorliegenden Erfindung, der a) Cyanamid, b) mindestens ein Harnstoffderivat der Formel (I) oder Formel (II) und c) mindestens einen Stabilisator ausgewählt aus der Gruppe der organischen Säuren, insbesondere aromatische und nichtaromatische Carbonsäuren, Dicarbonsäuren oder Tricarbonsäuren, umfasst, wobei der Härter Cyanamid und mindestens ein Harnstoffderivat der Formel (I) oder Formel (II) in einem molaren Verhältnis Cyanamid : Harnstoffderivat oder Harnstoffderivat-Mischung von 1 : 1 bis 4 : 1 umfasst.

Es kann jedoch auch vorgesehen sein, dass ein flüssiger Härter zur Härtung von härtbaren Polymerharzen a) Cyanamid, b) mindestens ein Harnstoffderivat der Formel (I) oder Formel (II) und c) mindestens einen Stabilisator ausgewählt aus der Gruppe der anorganischen Säuren, insbesondere anorganischen Säuren ausgewählt aus der Gruppe Salzsäure, Schwefelsäure, schweflige Säure, Phosphorsäure, phosphorige Säure, ortho-Phosphorsäure, Diphosphorsäure, Triphosphorsäure, Polyphosphorsäure, Salpetersäure oder deren Anhydride umfasst, wobei der Härter Cyanamid und mindestens ein Harnstoffderivat der Formel (I) oder Formel (II) umfasst und bevorzugt in einem molaren Verhältnis Cyanamid : Harnstoffderivat oder Harnstoffderivat-Mischung von 1 : 1 bis 4 : 1 umfasst.

Besonders bevorzugt sind solche Säuren, insbesondere anorganische Säuren, die einen Wassergehalt von weniger als 20 Gew.-% (bezogen auf die Säure) aufweisen. Ganz besonders bevorzugt sind solche Säuren, insbesondere anorganische Säuren, die einen Wassergehalt von weniger als 15 Gew.-%, weiterhin bevorzugt weniger als 10 Gew.-% und ganz besonders weniger als 5 Gew.-% (jeweils bezogen auf die Säure) aufweisen. Somit können flüssige Härter bereit gestellt werden, die ihrerseits flüssig und im Sinn der vorliegenden Erfindung losemittelfrei sind.

Überraschend wurde gefunden, dass die Lagerstabilität der Epoxidharz-Zusammensetzungen durch den Zusatz von anorganischen oder organischen Säuren verbessert werden kann. Durch das Hinzufügen von Stabilisatoren, insbesondere aus der Gruppe Salicylsäure, Phthalsäure, Toluolsulfonsäure, Schwefelsäure, Phosphorsäure oder deren Anhydride oder Mischungen hiervon, konnte die Latenz verdoppelt, in einigen Fällen sogar verdreifacht werden. Hierbei werden gleichzeitig die hervorragenden Härtungseigenschaften, wie beispielsweise die hohe Reaktivität bei der Härtungstemperatur, im Vergleich zu den Härtern ohne Stabilisatoren beibehalten.

Besonders bevorzugt sind solche flüssigen Härter, die a) Cyanamid, b) mindestens ein Harnstoffderivat der Formel (I) oder Formel (II) oder Mischungen hiervon und c) einen Stabilisator aus der Gruppe der anorganischen oder organischen Säuren enthalten.

Als besonders geeignet haben sich insbesondere solche Härter gezeigt, die a) 40 bis 70 Gew.-% Cyanamid, b) 30 bis 60 Gew.-% mindestens ein Harnstoffderivat der oben wiedergegebenen Formel (I) und/oder Formel (II) oder Auswahl und c) 0,1 bis 10 Gew.-% Stabilisator ausgewält aus der Gruppe der anorganischen oder organischen Säuren umfassen, insbesondere enthalten.

Besonders bevorzugt sind hierbei solche Härter, die 45 bis 70 Gew.-%, insbesondere 45 bis 60 Gew.-% und ganz besonders bevorzugt 45 bis 55 Gew.-% Cyanamid umfassen oder enthalten.

Gleichzeitig oder unabhängig hiervon können erfindungsgemäße Härter insbesondere 35 bis 60 Gew.-%, insbesondere 35 bis 55 Gew.-% und ganz besonders bevorzugt 45 bis 55 Gew.-% mindestens ein Harnstoffderivat der oben wiedergegebenen Formeln (I) und/oder Formel (II) oder Auswahl umfassen oder enthalten.

Gleichzeitig oder unabhängig hiervon können erfindungsgemäße Härter insbesondere 0,1 bis 8 Gew.-%, insbesondere 0,1 bis 7 Gew.-% und ganz besonders bevorzugt 0,1 bis 5 Gew.-% Stabilisator umfassen oder enthalten.

In Weiterbildung der vorliegenden Erfindung sind ebenso Epoxidharz-Zusammensetzungen umfassend a) mindestens ein härtbares Epoxidharz und b) mindestens einen flüssigen Härter gemäß der oben beschriebenen Art sowie Polyurethanharz-Zusammensetzungen umfassend a) mindestens ein härtbares Polyurethanharz und b) mindestens einen flüssigen Härter gemäß der oben beschriebenen Art, Gegenstand der vorliegenden Erfindung. Dabei sind besonders bevorzugt solche Epoxidharz-Zusammensetzungen, die a) ein Epoxidharz, b) mindestens einen flüssigen Härter gemäß der oben beschriebenen Art und c) einen Stabilisator ausgewählt aus der Gruppe der anorganischen Säuren und/oder organischen Carbosäuren umfasst oder enthält.

Im Hinblick auf die zu härtenden Epoxidharze unterliegt die vorliegende Erfindung keinerlei Beschränkung. Es kommen sämtliche handelsüblichen Produkte in Frage, die üblicherweise mehr als eine 1,2-Epoxidgruppe (Oxiran) aufweisen und dabei gesättigt oder ungesättigt, aliphatisch, cycloaliphatisch, aromatisch oder heterozyklisch sein können. Außerdem können die Epoxidharze Substituenten wie Halogene, Phosphor- und Hydroxyl-Gruppen aufweisen. Epoxidharze auf Basis Glycidylpolyether von 2,2-Bis(4-hydroxyphenyl)-propan (Bisphenol A) sowie das mit Brom substituierte Derivat (Tetrabrombisphenol A), Glycidylpolyether von 2,2-Bis(4-hydroxyphenyl)methan (Bisphenol F) und Glycidylpolyether von Novolacken sowie auf Basis von Anilin oder substituierten Anilinen wie beispielsweise p-Aminophenol oder 4,4'-Diaminodiphenylmethane können durch Verwendung der erfindungsgemäßen Härter besonders gut gehärtet werden.

Die Einsatzmenge der erfindungsgemäßen flüssigen Härter unterliegt keinen Beschränkungen. Bevorzugt werden jedoch auf 100 Teile Harz 0,01 bis 15 Teile eingesetzt, vorzugsweise 0,1 bis 15 Teile, vorzugsweise 0,1 bis 10 Teile und ganz besonders bevorzugt 0,1 bis 7 Teile. Auch eine Kombination mehrerer erfindungsgemäßer, flüssigen Härter oder eine Kombination von erfindungsgemäßen flüssigen Härtern mit weiteren Co-Härtern wird durch diese Erfindung mit abgedeckt.

Die Härtung der Epoxidharze mit Hilfe der erfindungsgemäß eingesetzten Härter erfolgt in der Regel bei Temperaturen ab 80°C. Die Wahl der Härtungstemperatur ist abhängig von der spezifischen Verarbeitungs- und Produktanforderung und kann über die Formulierung vor allem durch Regulierung der Härtermengen sowie durch Zugabe von Additiven variiert werden. Hierbei ist es unerheblich, auf welche Art den Harzformulierungen Energie zugeführt wird. Beispielhaft kann dies in Form von Wärme durch einen Ofen oder Heizelemente, aber ebenso mittels Infrarotstrahlern oder Anregung durch Microwellen oder sonstiger Strahlen geschehen.

Durch den Zusatz weiterer handelsüblicher Additive, wie sie dem Fachmann zur Härtung von Epoxidharzen bekannt sind, kann das Härtungsprofil der erfindungsgemäßen Formulierungen variiert werden.

Additive zur Verbesserung der Verarbeitbarkeit der unausgehärteten Epoxidharz-Zusammensetzungen oder zur Anpassung der thermisch-mechanischen Eigenschaften der duroplastischen Produkte an das Anforderungsprofil umfassen beispielsweise Reaktiwerdünner, Füllstoffe, Rheologieadditive wie Thixotropierungsmittel oder Dispergieradditive, Defoamer, Farbstoffe, Pigmente, Zähmodifikatoren, Schlagzähverbesserer oder Brandschutzadditive.

Epoxidharz-Formulierungen mit den erfindungsgemäßen Härter eignen sich sowohl für manuelle als auch maschinelle Verarbeitungsverfahren und im Besonderen zur Herstellung von imprägnierten Verstärkungsfasern und Composits, wie sie u.a. in den Schriften von G. W. Ehrenstein, Faserverbund-Kunststoffe, 2006, 2. Auflage, Carl Hanser Verlag, München, Kapitel 5, Seite 148ff, und M. Reyne, Composite Solutions, 2006, JEC Publications, Kapitel 5, Seite 51ff, beschrieben sind. Neben dem Einsatz in Prepreg-Verfahren ist insbesondere die Handhabung in Infusions- und Injektionsverfahren eine bevorzugte Verarbeitungsform. Hierbei sind die im Allgemeinen sehr guten Mischbarkeiten der erfindungsgemäßen flüssigen Härter in den Epoxidharzen von Vorteil, da für den Imprägnierprozess fließfähige Infusionsharze mit niedriger Viskosität benötigt werden (vgl. u.a. M. Reyne, Composite Solutions, 2006, JEC Publications, Kapitel 5, Seite 65; und G. W. Ehrenstein, Faserverbund-Kunststoffe, 2006, 2. Auflage, Carl Hanser Verlag, München, Kapitel 5, Seite 166).

Damit ist auch ein Composit-Material umfassend a) ein Trägermaterial, insbesondere ein Fasermaterial, b) mindestens ein härtbares Epoxidharz und/oder härtbares Polyurethanharz und c) mindestens einen flüssigen Härter der oben beschriebenen Art Gegenstand der Erfindung.

Damit sind ebenfalls die Verwendung von flüssigen Härtern der oben beschriebenen Art zur Härtung von härtbaren Zusammensetzungen Gegenstand der vorliegenden Erfindung. Insbesondere ist dies Verwendung auf Zusammensetzungen gerichtet, die mindestens ein härtbares Epoxidharz und/ oder ein härtbares Polyurethanharz umfassen.

Des Weiteren ist von der vorliegenden Erfindung auch die Verwendung von flüssigen Härtern der oben beschriebenen Art zur Härtung von imprägnierten Fasermaterialien oder imprägnierten Geweben, Gewirken oder Geflechten umfasst.

Aufgrund der günstigen Anwendungseigenschaften der erfindungsgemäßen flüssigen Härter und ihrer niedrigen Dosierung wird ein vorteilhaftes Kosten-Nutzen-Verhältnis erreicht, womit diese Härter besonders gut für eine technische Anwendung geeignet sind.

Die nachfolgenden Beispiele verdeutlichen die Vorteile der vorliegenden Erfindung.

### Beispiele

### I. Erfindungsgemäße Härter

### 1) Herstellung der erfindungsgemäßen Härter

### Apparatur:

Labordissolver (DISPERMAT Typ AE03-C1), 500 ml Metall-Dispergiergefäß, Dissolverscheibe mit Ø von 60 mm, Metallspatel

### Durchführung:

In ein 500 ml Dispergiergefäß werden 100 g der Einzelkomponenten (gemäß Tabelle 1) gewogen und mit Hilfe eine Spatels kurz durchgemischt. Die Mischung wird am Dissolver mit 100 - 200 U/min so lange gerührt, bis ein dünner Kristallbrei entsteht. Dann wird die Mischung bei 500 bis 2000 U/min gerührt bis eine Temperatur von 40 °C erreicht wird. Gegebenenfalls werden hiernach auf 100 g Härter 2 g Stabilisator (organische bzw. anorganische Säure) zur Stabilisierung der Flüssigkeit zugegeben. Anschließend wird die Flüssigkeit mit 100 U/min so lange weitergerührt bis eine Temperatur von 25 °C erreicht ist. Der angefallene Rückstand wird abfiltriert. Die so gewonnene flüssige Phase wird abgefüllt und bei Raumtemperatur (23 °C) aufbewahrt.

### Ausbeute:

Die Ausbeute liegt je nach Mischen zwischen 75% und 97%.

Durch die Zugabe der Erfindungsgemäßen Stabilisatoren erhöht sich die Ausbeute von 75 - 90% auf 83 - 97%.

**Tabelle 1: Zusammensetzungen der erfindungsgemäßen flüssigen Härter**

| **flüssige Härter** | **Cyanamid** | **Harnstoff B1** | **Harnstoff B2** | **Harnstoff B3** | **Harnstoff B4** | **Stabilisator** |
|---|---|---|---|---|---|---|
| | **molarer Anteil** | **molarer Anteil** | **molarer Anteil** | **molarer Anteil** | **molarer Anteil** | **molarer Anteil** |
| H1 | 3 | 1 | 0,16 | - | - | - |
| H1.S2 | 3 | 0,72 | 0,24 | - | - | 0,06 |
| H1.S3 | 3 | 0,72 | 0,24 | - | - | 0,04 |
| H1.S4 | 3 | 1,25 | 0,30 | - | - | 0,11 |
| H1.S5 | 3 | 0,97 | 0,16 | - | - | 0,06 |
| H1.S6 | 3 | 1,01 | 0,21 | - | - | 0,07 |
| H1.S7 | 3 | 1,43 | 0,32 | - | - | 0,07 |
| H1.S8 | 3 | 0,97 | 0,16 | - | - | 0,09 |
| H2 | 2 | 1,0 | - | - | - | - |
| H2.S8 | 2 | 1,0 | - | - | - | 0,05 |
| H3 | 2 | - | - | 1 | - | - |
| H3.S3 | 2 | - | - | 1 | - | 0,04 |
| H4 | 2 | - | 0,07 | 1 | - | - |
| H4.S3 | 2 | - | 0,07 | 1 | - | 0,04 |
| H5 | 3 | - | - | - | 0,40 | - |
| H5.S2 | 3 | - | - | - | 0,40 | 0,09 |

### Eingesetzte Rohstoffe:

- Cyanamid: : AlzChem AG
- Harnstoff B1: : 1,1-Dimethylharnstoff - AlzChem AG
- Harnstoff B2: : technisches Isomerengemisch 1,1'-(4-Methyl-m-phenylen)-bis-(3,3-dimethylharnstoff) und 1,1'-(2-Methyl-m-phenylen)-bis-(3,3-dimethylharnstoff) - AlzChem AG
- Harnstoff B3: : Harnstoff - Merck KGaA
- Harnstoff B4: : 1-(N,N-Dimethylurea)-3-(N,N-dimethylureamethyl)-3,5,5-trimethylcyclohexane - CAS: 39992-90-0 - AlzChem AG
- E 828: : Epikote 828 - Momentive Specialty Chemicals
- E 828LVEL: : Epikote 828 LVEL - Momentive Specialty Chemicals
- Stabilisator S2: : [Phosphorsäure (flüssig) 85% pro analysi von Merck]
- Stabilisator S3: : [Salicylsäure (fest) & Phosphorsäure (flüssig) (H₃PO₄ pro analysi 85% von Merck)] im Verhältnis 1:1
- Stabilisator S4: : [Salicylsäure (fest) reinst von Merck]
- Stabilisator S5: : [Phthalsäure (fest) min. 99,5% von Merck ]
- Stabilisator S6: : [Phthalsäureanhydrid (fest) >98% von Merck]
- Stabilisator S7: : [Toluol-4-sulfonsäure-Monohydrat (fest) > 97% von Merck]
- Stabilisator S8: : [Schwefelsäure (flüssig) >97% von J.T. Baker]
- RIMR 135: : Epoxidharz - Momentive Specialty Chemicals
- RIMH 137: : flüssiger Aminhärter - Momentive Specialty Chemicals
- Vestamin IPDA: : flüssiger Aminhärter - Evonik Degussa GmbH

### 2) Viskositäten der erfindungsgemäßen flüssigen Härter

### Bestimmung der Viskosität:

Messung auf HAAKE Rheostress 1 durchgeführt bei 25 °C in mPa*s, mit 0 35 mm und 1° mit einer Scherrate von 5,0 1/s (reziproke Sekunde)

**Tabelle 2: Viskosität in mPa*s bei gegebenen Temperaturen**

| **Härter** | **bei 10 °C** | **bei 15 °C** | **bei 20 °C** | **bei 25 °C** | **bei 30 °C** |
|---|---|---|---|---|---|
| H1 | 12 - 14 | 11 - 13 | 10 - 12 | 10 - 11 | 10 - 11 |
| H1.S2 | 12 - 14 | 11 - 13 | 10 - 12 | 10 - 11 | 10 - 11 |
| H1.S3 | 12 -14 | 11 - 13 | 10 - 12 | 10 - 11 | 10 - 11 |
| H1.S4 | 12 - 14 | 11 - 13 | 10 - 12 | 10 - 11 | 10 - 11 |
| H1.S5 | 12 - 14 | 11 - 13 | 10 - 12 | 10 - 11 | 10 - 11 |
| H1.S6 | 12 - 14 | 11 - 13 | 10 - 12 | 10 - 11 | 10 - 11 |
| H1.S7 | 12 - 14 | 11 - 13 | 10 - 12 | 10 - 11 | 10 - 11 |
| H1.S8 | 12 - 14 | 11 - 13 | 10 - 12 | 10 - 11 | 10 - 11 |
| H2 | 9 - 11 | 7 - 9 | 7 - 9 | 6 - 8 | 5 - 7 |
| H2.S8 | 9 - 11 | 7 - 9 | 7 - 9 | 6 - 8 | 5 - 7 |
| H3 | - | 5 - 7 | 5 - 7 | 5 - 6 | 4 - 5 |
| H3.S3 | 7 - 10 | 5 - 7 | 5 - 7 | 5 - 6 | 4 - 5 |
| H4 | 8 - 10 | 8 - 10 | 7 - 9 | 6 - 8 | 5 - 7 |
| H4.S3 | 8 - 10 | 8 - 10 | 7 - 9 | 6 - 8 | 5 - 7 |
| H5 | 13 - 15 | 12 - 14 | 11 - 13 | 10 - 12 | 10 - 11 |
| H5.S2 | 13 - 15 | 12 - 14 | 11 - 13 | 10 - 12 | 10 - 11 |

Tabelle 2 zeigt, dass die Viskositäten der erfindungsgemäßen Gemische durch die Säurestabilisierung nicht beeinflusst wird.

### 3) Schmelzpunkte der erfindungsgemäßen Härter

Bestimmung der Schmelzpunkte mittels DSC-Methode.
Messung auf Mettler Toledo DSC 822
Dyn. DSC -40 °C - 60 °C mit einer Aufheizrate von 10 °K/min

**Tabelle 3: Schmelzpunkt**

| **Härter** | **erster Peak** | **zweiter Peak** |
|---|---|---|
| H1 | 12 - 16°C | - |
| H1.S2 | 11 - 16°C | - |
| H1.S3 | 12 - 17°C | - |
| H1.S4 | 12 - 16°C | - |
| H1.S5 | 12 - 16°C | - |
| H1.S6 | 12 - 16°C | - |
| H1.S7 | 12 - 16°C | - |
| H1.S8 | 11 - 16°C | - |
| H2 | -24 - -22 °C | 10 - 17°C |
| H2.S8 | 12 - 19°C | - |
| H3 | -30 - -8 °C | 13 - 15 °C |
| H3.S3 | 13 - 16°C | - |
| H4 | -30 - -28 °C | 8 - 9 °C |
| H4.S3 | 10 - 15°C | - |
| H5 | 13 - 17°C | - |
| H5.2 | 12 - 16°C | - |

Die Schmelzpunkte der Härter H2, H3 und H4 werden durch die Säurestabilisierung um 30 bis 40°C angehoben, hier entfallen dann die zweiten Peaks.

### II. Erfindungsgemäße Epoxidharz-Zusammensetzung

### 1) Herstellung von Epoxidharz-Zusammensetzungen

In ein 250 ml Dispergiergefäß werden 100 Gewichtsteile Epoxidharz und 7 Gewichtsteile der erfindungsgemäßen Härter eingewogen und am Dissolver mit 500 U/min 2 Minuten lange gemischt. Anschließend wird die Mischung im Vakuum 10 Minuten entlüftet.

### 2) Messmethoden

∘ Dyn-DSC: Standard 30 - 250 °C, mit einer Aufheizrate von 10 °K/min
∘ Kalt-Tg: Standard 30 - 250 °C, mit einer Aufheizrate von 10 °K/min
∘ End-Tg: Standard Tg
   aufheizen von 30°C auf 200°C mit 20°C/min
   10,0 min bei 200°C gehalten
   abkühlen von 200°C auf 50°C mit 20°C/min
   5,0 min bei 50°C gehalten
   aufheizen von 50°C auf 200°C mit 20°C/min
   10,0 min bei 200°C gehalten
   abkühlen von 200°C auf 50°C mit 20°C/min
   5,0 min bei 50°C gehalten
   aufheizen von 50°C auf 220°C mit 20°C/min
∘ Viskosität bei 25 °C in Pa*s (1 ° Kegel)
∘ Gelzeit bei 140 °C
∘ Infusionsversuche auf der Heizplatte bei 80 °C

**Tabelle 4: Use-Tests - Epoxidharz-Zusammensetzung mit erfindungsgemäßen flüssigen Härter (ohne Stabilisierung: nicht erfindungsgemäß) - jeweils 100 Gewichteile Epoxidharz, 7 Gewichtsteile flüssige Härter bzw. Pulvermischung, falls nicht anders angegeben**

| **Nr.** | **Epoxidharz-Zusammensetzung** | **Dyn DSC Peak [°C]** | **Dyn DSC Onset [°C]** | **integrale Wärme [J/g]** | **Gelzeit bei 140 °C in min:sek** | **Glaspunkt Tg [°C]** | **Viskosität bei 25 °C in Pa*s** |
|---|---|---|---|---|---|---|---|
| E1 | E828 : (Pulvermischung: Cyanamid + B1 + B2) (ohne Stabilisator) | 153,3 | 142,0 | 143 | 03:30 | 119 | 5,7 |
| E2 | E828 : H1 (ohne Stabilisator) | 147 | 136 | 287 | 03.40 | 123 | 4,0 |
| E2.S2 | E828LVEL : H1.S2 | 153 | 143 | 288 | 04:30 | 123 | 4,8 |
| E2.S3 | E828LVEL: H1.S3 | 153 | 143 | 249 | 04:30 | 124 | 4,1 |
| E2.S4 | E828LVEL : H1.S4 | 150 | 139 | 235 | 04:10 | 126 | 4,5 |
| E2.S5 | E828LVEL : H1.S5 | 150 | 140 | 247 | 04:15 | 123 | 4,7 |
| E2.S6 | E828LVEL: H1.S6 | 150 | 140 | 287 | 04:15 | 124 | 4,6 |
| E2.S7 | E828LVEL : H1.S7 | 150 | 142 | 282 | 04:30 | 126 | 4,2 |
| E2.S8 | E828LVEL : H1.S8 | 149 | 140 | 366 | 04:00 | 124 | 4,1 |
| E3 | E828 : (Pulvermischung: Cyanamid + B1) (ohne Stabilisator) | 144,7 | 130,0 | 339 | 04:10 | 122 | 5,5 |
| E4 | E828 : H2 (ohne Stabilisator) | 143 | 128 | 380 | 03:15 | 126 | 3,4 |
| E4.S8 | E828LVEL : H2.S8 | 148 | 138 | 422 | 03:45 | 125 | 4,3 |
| E5 | E828 : (Pulvermischung: Cyanamid + B3) (ohne Stabilisator) | 171,4 | 158,1 | 150 | 53:00 | 138 | n.m. |
| E6 | E828 : H3 (ohne Stabilisator) | 172 | 156 | 65 | 32:00 | 144 | 3,9 |
| E6.S3 | E828LVEL : H3.S3 | 173 | 163 | 30 | 44:00 | 137 | 4,4 |
| E7 | E828: (Pulvermischung: Cyanamid + B3 + B2) (ohne Stabilisator) | 162,7 | 140,9 | 169 | 10:00 | 130 | n.m. |
| E8 | E828 : H4 (ohne Stabilisator) | 154 | 135 | 310 | 05:30 | 137 | 4,8 |
| E8.S3 | E828LEVEL : H4.S3 | 160 | 142 | 283 | 10:00 | 139 | 5,1 |
| E9 | E828 : VESTAMIN IPDA 100 : 23 (ohne Stabilisator) | 115,5 | 79,7 | 453 | 13:30 bei 80°C | 99 | 5,3 |
| E10 | RIMR135 : RIMH137 100 : 30 (ohne Stabilisator) | 125,9 | 87,9 | 436,0 | 40:00 bei 80°C | 98 | 4,1 |
| E11 | E828 : H5 | 139,0 | 147,3 | 296 | 04:50 | 131 | 5,5 |
| E11.S2 | E828 : H5.S2 | 145,9 | 152,8 | 380 | 05:30 | 130 | 5,8 |

| | | | | | | | |
|---|---|---|---|---|---|---|---|
| n.m. = nicht messbar, bei der Einzelzugabe der Pulver bilden sich Agglumerate, die eine exakte Viskositätsmessung im Epoxidharz verhindern | | | | | | | |

Aus der Tabelle 4 sind die Vorteile der erfindungsgemäßen flüssigen Härter bei der Härtung von Epoxidharzen im Vergleich zu den Einzelzugaben der vergleichbaren Härter und Beschleuniger als Pulverkomponenten ablesbar.

Bei den erfindungsgemäßen flüssigen Gemischen beginnt die Härtung im Vergleich zu den Pulvermischungen gleicher Zusammensetzungen durchwegs bei niedrigren Temperaturen, die Zeiten bis zur beginnenden Polymerisation (Gelzeit bei 140°C) sind kürzer. Die erfindungsgemäßen Gemische erniedrigen die Viskosität der Epoxidharze signifikant bis zu ca. 50 %, was ihren Einsatz als Härter für Infusionsharzsysteme empfiehlt, und erhöhen deren Glasübergangstemperaturen. Die durchwegs höheren integralen Wärmemengen (J/g) deuten eine spontanere Reaktion der erfindungsgemäßen Gemische im Vergleich zu den als Härter und Beschleuniger eingesetzten Pulvereinzelkomponenten an. Zudem wird nur die Hälfte bzw. ein Drittel der Härtermenge (im Vergleich zu bekannten flüssigen Aminhärtern) benötigt. Hierdurch kann ein erheblicher Kostenvorteil realisiert werden.

Im Vergleich dazu zeigen die bekannten und gebräuchlichen flüssigen Aminhärter wie z.B. RIMH 137 (Fa. Momentive) oder IPDA (Fa. Evonik) zwar niedrigere Härtungstemperaturen, die erfindungsgemäßen Gemische beginnen die Polymerisation aber zu vergleichbaren Zeiten und erzielen weit höhere Glasübergangstemperaturen.

Darüber hinaus zeigt die Übersicht, dass sich die Reaktivitäten der erfindungsgemäßen Härter durch die Stabilisierung mit Säuren im Vergleich mit den Grundmischungen nur leicht verändern. Die Reaktivitäten werden durch die Säurestabilisierung etwas geringer. Auch die Glasübergangstemperaturen und die Viskositäten bleiben in der gleichen Größenordnung.

**Tabelle 5: Latenzen der Epoxidharz-Zusammensetzungen gemäß Tabelle 4 in Tagen (d) - bei 23°C im Klimaschrank (Viskosität bei 25 °C gemessen)**

| **Nr.** | **Start** | **1d** | **4d** | **5d** | **6d** | **7d** | **8d** | **10d** | **12d** | **16d** | **18d** | **20d** | **25d** | **30d** | **35d** | **40d** | **Ergebnis** |
|---|---|---|---|---|---|---|---|---|---|---|---|---|---|---|---|---|---|
| E1 | 5,7 | 4,8 | 7,2 | 10 | 21 | 102 | >500 | fest | - | - | - | - | - | - | - | - | |
| E2 | 4,0 | 4,2 | 10,1 | 17,9 | 40,1 | - | - | - | - | - | - | - | - | - | - | - | 4 Tage |
| E2.S2 | 4,8 | 4,8 | 4,9 | 4,9 | 4,9 | 5,0 | 5,1 | 5,2 | 5,3 | 6,9 | 12,7 | 25,1 | - | - | - | - | 16-17 Tage |
| E2.S3 | 4,1 | 4,1 | 4,1 | 4,2 | 4,3 | 4,6 | 4,8 | 5,5 | 6,7 | 11,9 | 62,8 | - | - | - | - | - | 14-15 Tage |
| E2.S4 | 4,5 | 4,5 | 4,6 | 4,8 | 4,9 | 7,9 | 13,9 | 55,3 | - | - | - | - | - | - | - | - | 7-8 Tage |
| E2.S5 | 4,7 | 4,7 | 4,8 | 4,9 | 5,7 | 6,6 | 11,0 | 32,3 | - | - | - | - | - | - | - | - | 7-8 Tage |
| E2.S6 | 4,6 | 4,6 | 4,7 | 4,9 | 5,3 | 6,5 | 11,5 | 42,3 | - | - | - | - | - | - | - | - | 7-8 Tage |
| E2.S7 | 4,2 | 4,3 | 4,5 | 5,0 | 6,0 | 7,0 | 11,0 | 38,1 | - | - | - | - | - | - | - | - | 7-8 Tage |
| E2.S8 | 4,1 | 4,3 | 4,6 | 5,2 | 5,4 | 5,7 | 9,7 | 21,3 | - | - | - | - | - | - | - | - | 7-8 Tage |
| E3 | 5,5 | 5,6 | 14 | 14 | 14 | 21 | fest | | | | | | - | - | - | - | 2 Tage |
| E4 | 3,4 | 3,9 | 9,5 | 53,0 | - | - | - | - | - | - | - | - | - | - | - | - | 3 Tage |
| E4.S8 | 4,3 | 4,3 | 4,3 | 4,3 | 4,3 | 4,5 | 4,7 | 4,9 | 11,9 | 133 | - | - | - | - | - | - | 10-11 Tage |
| E5 | n.m. | n.m. | n.m. | n.m. | n.m. | n.m. | n.m. | n.m. | n.m. | fest | | | - | - | - | - | |
| E6 | 3,9 | 3,9 | 4,2 | 4,4 | 5,6 | 8,1 | 13,0 | 130 | - | - | - | - | - | - | - | - | 7 Tage |
| E6.S3 | 4,4 | 4,4 | 4,4 | 4,4 | 4,4 | 4,4 | 4,4 | 4,4 | 4,4 | 4,4 | 4,4 | 4,5 | 4,5 | 4,6 | 6,8 | 38,4 | 35 Tage |
| E7 | n.m. | n.m. | n.m. | n.m. | n.m. | n.m. | n.m. | n.m. | n.m. | fest | | | - | - | - | - | n.m. |
| E8 | 4,8 | 4,8 | 5,2 | 6,7 | 13,9 | 47,6 | - | - | - | - | - | - | - | - | - | - | 5 Tage |
| E8.S3 | 5,1 | 5,1 | 5,1 | 5,1 | 5,1 | 5,1 | 5,1 | 5,1 | 5,2 | 5,3 | 5,5 | 5,7 | 5,9 | 13,1 | 33,0 | | 30 Tage |
| E9 | 5,3 | fest | - | - | - | - | - | - | - | - | - | - | - | - | - | - | > 1 Tag |
| E10 | 4,1 | fest | - | - | - | - | - | - | - | - | - | - | - | - | - | - | > 1 Tag |
| E11 | 5,5 | 5,5 | 5,5 | 5,5 | 5,5 | 5,5 | 5,6 | 5,7 | 6,7 | 8,0 | 12,9 | 37,6 | | | | | 17 Tage |
| E11.S2 | 5,8 | 5,8 | 5,8 | 5,8 | 5,8 | 5,8 | 5,8 | 5,8 | 5,8 | 5,8 | 5,9 | 6,0 | 6,1 | 6,4 | 7,8 | 10,1 | 40 Tage |

| | | | | | | | | | | | | | | | | | |
|---|---|---|---|---|---|---|---|---|---|---|---|---|---|---|---|---|---|
| n.m. = nicht messbar, bei der Einzelzugabe der Pulver bilden sich Agglomerate, die eine exakte Viskositätsmessung im Epoxidharz verhindern | | | | | | | | | | | | | | | | | |

Die Lagerfähigkeiten = Latenzen von Härter/Beschleuniger Systemen in Epoxidharz werden erheblich von der Löslichkeit dieser Systeme im Harz geprägt. Die relative Unlöslichkeit von pulverförmigen Härter/Beschleuniger Systemen bei Temperaturen < 60°C in Epoxidharz erlauben lange Lagerzeiten dieser Mischungen ohne dass die Komponenten miteinander reagieren.

Mischungen flüssiger Härter/Beschleuniger in Epoxidharz lassen eine schnelle Reaktion der Komponenten miteinander erwarten, was in stark eingeschränkten Lagerfähigkeiten = Latenzen mündet. Dies zeigen die in Tabelle 5 aufgeführten Aminhärter (RIMH 137 Fa. Momentive und Vestamin IPDA Fa. Evonik).

Überraschend zeigen aber die flüssigen erfindungsgemäßen Härter bei Raumtemperatur keine schnellen Reaktionen mit Epoxidharzen, ihre Lagerfähigkeiten = Latenzen in Epoxidharzen ist daher deutlich länger als die klassischer flüssiger Aminhärter-Systeme.

In Tabelle 5 zeigt sich die volle Auswirkung der erfindungsgemäßen Härter mit Säurestabilisierung im Vergleich zu ihren Grundmischungen. Die Latenzen der stabilisierten Gemische werden drastisch verlängert, was die Gebrauchssicherheit von Epoxydharzformulierungen in der Anwendung als einkomponentige Infusions- bzw. Injektionsharzformulierungen wesentlich erhöht.

### Petrischalen-Test:

30 g einer Mischung aus E828LVEL und einem Flüssig-Härter wird im Verhältnis 100:7,0 werden in eine in eine Petrischale (als Trennmittel mit XTEND Release 19CMS vorbehandelt) mit einem Ø von 10 cm gewogen und einem Deckel verschlossen. Die Petrischale wird bei 80°C im Trockenschrank gegeben und nachdem die Mischung fest geworden ist wieder entnommen. Nach dem Abkühlen wird die entstandene Scheibe entnommen und ein Teil der Scheibe für eine Kalt-Tg- und End-Tg-Bestimmung verwendet.

**Tabelle 6: Kalt-Tg- und End-Tg-Bestimmung erfindungsgemäßer Epoxidharz-Zusammensetzungen gemäß Tabelle 4**

| Nr. | Epoxidharz-Zusammensetzung | Kalt-Tg [°C] | Restwärme [J/g] | End-Tg [°C] |
|---|---|---|---|---|
| E2 | E828LVEL : H1 | 82,0 | 54 | 132 |
| E2.S8 | E828LVEL : H1.S3 | 71,5 | 103 | 131 |
| E2.S3 | E828LVEL : H1.S3 | 69,1 | 131 | 129 |
| E4.S1 | E828LVEL : H4 | 89,9 | 82 | 132 |
| E4.S8 | E828LVEL : H4.S8 | 63,0 | 158 | 126 |
| E11.S2 | E828LVEL : H5.S1 | 97,2 | 72 | 139 |

Bei der Masseaushärtung verhalten sich die erfindungsgemäßen Gemische wie ihre unstabilisierten Ausgangsgemische

### Versuchsdurchführung Infusion:

Epoxidharz-Zusammensetzungen gemäß Tabelle 4 werden in einem beheizbaren Vorratsgefäß gemischt und vorgewärmt. Der Zuleitungsschlauch wird in das Vorratsgefäß eingeführt und fixiert, der Ableitungsschlauch (siehe Aufbau eines Infusionsversuchs, Tabelle 7) wird über ein Sicherheitsventil mit der Vakuumpumpe verbunden, die Pumpe wird eingeschaltet. Die Heizplatte (sie simuliert die beheizbare Form) wird auf die Infusionstemperatur gebracht. Mit dem Anlegen des Vakuums wird die Epoxidharz-Zusammensetzung durch den Faserverbund gesaugt. Nach vollständiger Tränkung werden Zu- und Ablaufschlauch abgeklemmt und gekappt, der gesamte Aufbau härtet nun auf der Heizplatte zu einem Laminat aus. Nach vollständiger Härtung und Abkühlung wird das Laminat aus dem Aufbau entfernt.

**Tabelle 7: Faserverbund - Aufbau für Infusionsversuche**

| **Bauteil** | **Material** |
|---|---|
| Grundschicht | R&G Vakuumfolie Nr. 390160 |
| Abdichtung | Tacky Tape SM5126-1/2" x X1/8 " |
| Trennfilm (unten) | Nylon Peel ply (Leinwandbindung 64 g/m³) versetzt |
| Laminat (Glasfaser) | 3 Lagen Atlas FK 144 (296 g/m³) |
| Trennfilm (oben) | Nylon Peel ply (Leinwandbindung 64 g/m³) versetzt |
| Trennfolie | R&G Trennfolie Nr. 390190 |
| Belüftungsfilm | R&G Vlies Nr. 390180 |
| Vacuum mesh | Entlüftungsnetz 150 g/m³ (Läufrichtung - schwarz) |
| Vakuumfolie | R&G Vakuumfolie Nr. 390160 |
| Schläuche (Zu- u. Ableitung) | PVC, klar (3,0 mm innen Ø, 5,0 mm außen 0) |
| Träger | Glasplatte |

- Form:: Heizplatte
- Vorratsgefäß:: Becherglas
- Vakuum:: Vakuumpumpe Standard (<20 mbar)

**Tabelle 8: Infusions-Versuch mit Epoxidharz-Zusammensetzungen gemäß Tabelle 4 - Harz : Härter im Verhältnis 100 : 7,0 (Vergleiche)**

| **Epoxidharz-Zusammensetzung** | **Injektions-zeit in Minuten** | **Härtungszeit in h Temperatur in °C** | **Kalt-Tg** | **End-Tg** | **Bemerkungen** |
|---|---|---|---|---|---|
| E2 | 5 | 1h 59 - 63 °C | 72 | 128 | Faserverbund lässt sich gut entkernen Faserverbund sieht gut aus, ist gleichmäßig, hat keine Fehlstellen |
| | | 5 h 69 - 74 °C | | | |
| E2.S3 | 4 | 4,25h 80°C | 107 | 134 | Faserverbund lässt sich gut entkernen Faserverbund sieht gut aus, ist gleichmäßig, hat keine Fehlstellen |
| E4 | 12 | 20 h 70 °C | 79 | 137 | Faserverbund lässt sich gut entkernen Faserverbund sieht gut aus, ist gleichmäßig, hat keine Fehlstellen |
| E6 | 45 | 6 h 80°C | 56 | 134 | Faserverbund lässt sich gut entkernen Faserverbund sieht gut aus, ist gleichmäßig, hat keine Fehlstellen |
| E8 | 45 | 5,5 h 75°-78°C | 97 | 140 | Faserverbund lässt sich gut entkernen Faserverbund sieht gut aus, ist gleichmäßig, hat keine Fehlstellen |
| E9 | 20 | 6h 70°C | 93 | 99 | Faserverbund lässt sich gut entkernen Faserverbund sieht gut aus, ist gleichmäßig, hat keine Fehlstellen |
| E10 | 18 | 6,5 h 40°C | 68 | 93 | Faserverbund lässt sich gut entkernen Faserverbund sieht gut aus, ist gleichmäßig, hat keine Fehlstellen |
| | | und anschließend | | | |
| | | 16 h 80°C | | | |

Die pulverförmigen Härter/Beschleuniger Systeme der Einzelkomponenten sind für die Polymerisation der Epoxidharze nach dem Infusionsverfahren ungeeignet. Ihre Mischungen mit Epoxidharz werden an den Einsaugstellen von den feinmaschigen Geweben ausfiltriert (separiert) und stehen für eine Härtung der Epoxidharze nicht mehr zur Verfügung. Somit sind die Epoxidharz-Zusammensetzungen E1, E3, E5, E7 für die Herstellung von Composits mittels Infusionsverfahren nicht geeignet. Tabelle 8 zeigt aber, dass die erfindungsgemäßen Epoxidharz-Zusammensetzungen E2, E4, E6 und E8, die die erfindungsgemäßen flüssigen Härter H1, H2, H3 und H4 enthalten, wie die bekannten zwei-komponentigen Aminsysteme (RIMH 137 Fa. Momentive, IPDA Fa. Evonik) eine Imprägnierung der Gewebefasern nach dem Infusionsverfahren in vergleichbaren Zeitspannen erlauben. Hierbei benötigen sie jedoch in der Regel kürzere Härtungszeiten bei 80°C und erzielen deutlich höhere Glasübergangstemperaturen.

Darüber hinaus wird im Vergleich zu den zwei-komponentigen Aminsystemen (RIMH 137 Fa. Momentive, IPDA Fa. Evonik) eine deutlich geringere Menge an Härter benötigt.

Auch zeigt sich die Überlegenheit der neuen flüssigen Härter, indem ein höherer Glasübergangstemperatur (End Tg) im Composit erreicht wird.

Auch im Infusionsversuch lassen sich alle erfindungsgemäßen Härter wie ihre unstabilisierten Ausgangsgemische verwenden.

## Patentansprüche

1. Flüssige Härter zur Härtung von härtbaren Polymerharzen, insbesondere von Epoxidharzen, umfassend
a) Cyanamid;
b) mindestens ein Harnstoffderivat der Formel (I) oder Formel (II) 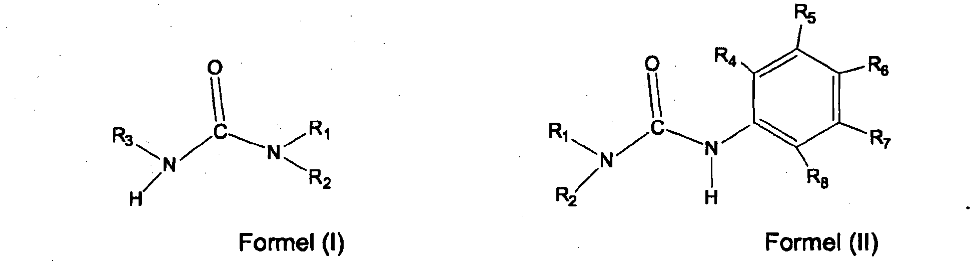 wobei für die Reste jeweils gleichzeitig oder unabhängig voneinander gilt:
R¹, R² = gleichzeitig oder unabhängig voneinander Wasserstoff, C1-bis C15-Alkyl, C3- bis C15-Cycloalkyl oder gemeinsam unter Bildung eines Ringes C3- bis C10-Alkylen;
R³ = Wasserstoff, C1- bis C15-Alkyl, C3- bis C15-Cycloalkyl, Aryl, Arylalkyl,
mit -NHC(O)NR¹R²substituiertes C1- bis C15-Alkyl, mit -NHC(O)NR¹R²substituiertes C3- bis C15-Cycloalkyl, mit -NHC(O)NR¹R²substituiertes Aryl oder
mit -NHC(O)NR¹R²substituiertes Arylalkyl;
R⁴, R⁵, R⁶, R⁷, R^{B} = gleichzeitig oder unabhängig voneinander Wasserstoff,
Halogen,
C1- bis C15-Alkyl, C3- bis C15-Cycloalkyl, Aryl, Arylalkyl,
- CF₃,
- NHC(O)NR¹R²,
mit -NHC(O)NR¹R²substituiertes C1- bis C15-Alkyl, mit -NHC(O)NR¹R²substituiertes Aryl oder
mit -NHC(O)NR¹R²substituiertes Arylalkyl; GEÄNDERTES BLATT (ARTIKEL 19) und c) mindestens einen Stabilisator ausgewählt aus der Gruppe der anorganischen oder organischen Säuren.

2. Flüssige Härter nach Anspruch 1 **dadurch gekennzeichnet, dass** die Härter Cyanamid und mindestens ein Harnstoffderivat der Formel (I) oder Formel (II) in einem molaren Verhältnis Cyanamid : Harnstoffderivat oder Harnstoffderivat-Mischung von 1 : 1 bis 4 : 1 umfassen.

3. Flüssige Härter nach Anspruch 1 oder 2 **dadurch gekennzeichnet, dass** der Härter neben Cyanamid, mindestens einem Harnstoffderivat und dem Stabilisator keine Lösemittel oder Lösungsvermittler umfasst oder lösemittelfrei oder lösungsvermittlerfrei ist.

4. Flüssige Härter nach mindestens einem der vorgenannten Ansprüche **dadurch gekennzeichnet, dass** der Härter mindestens zwei verschiedene Harnstoffderivate umfasst.

5. Flüssiger Härter nach mindestens einem der vorgenannten Ansprüche **dadurch gekennzeichnet, dass** der Härter ein Harnstoffderivat der Formel (I) umfasst, wobei für die Reste jeweils gleichzeitig oder unabhängig voneinander gilt:
R¹, R² = Wasserstoff, C1- bis C15-Alkyl;
R³ = Wasserstoff, C1- bis C15-Alkyl, C3- bis C15-Cycloalkyl, mit -NHC(O)NR¹R² substituiertes C1- bis C15-Alkyl, mit -NHC(O)NR¹R²substituiertes C3- bis C15-Cycloalkyl, oder mit -NHC(O)NR¹R² substituiertes Aryl.

6. Flüssiger Härter nach mindestens einem der vorgenannten Ansprüche **dadurch gekennzeichnet, dass** der Härter a) Cyanamid, b) ein Harnstoffderivat ausgewählt aus der Gruppe Harnstoff, 1,1-Dimethylharnstoff, 3-(3-Chlor-4-methylphenyl)-1,1-dimethylharnstoff, 3-(p-GEÄNDERTES BLATT (ARTIKEL 19) Chlorphenyl)-1,1-dimethylhamstoff, 3-Phenyl-1,1-dimethylhamstoff, 3-(3,4-Dichlorphenyl)-1,1-dimethylharnstoff, 1,1 '-(Methylendi-p-phenylen)-bis-(3,3-dimethylharnstoff), 3-(3-Trifluoromethylphenyl)1,1-dimethylharnstoff, 1,1'-(2-Methyl-m-phenylen)-bis-(3,3-dimethylharnstoff) und/oder 1,1'-(4-Methyl-m-phenylen)-bis-(3,3-dimethylharnstoff) und c) mindestens einen Stabilisator ausgewählt aus der Gruppe der anorganischen oder organischen Säuren enthält.

7. Flüssiger Härter nach mindestens einem der vorgenannten Ansprüche **dadurch gekennzeichnet, dass** als anorganische oder organische Säure eine Säure ausgewählt aus der Gruppe Salicylsäure, Phthalsäure, Toluolsulfonsäure, Schwefelsäure, Phosphorsäure oder deren Anhydride oder Mischungen hiervon verwendet wird.

8. Epoxidharz-Zusammensetzung umfassend
a) mindestens ein härtbares Epoxidharz und
b) mindestens einen flüssigen Härter gemäß mindestens einem der vorgenannten Ansprüche 1 bis 7.

9. Polyurethanharz-Zusammensetzung umfassend
a) mindestens ein härtbares Polyurethanharz und
b) mindestens einen flüssigen Härter gemäß mindestens einem der vorgenannten Ansprüche 1 bis 7.

10. Composit-Material umfassend
a) ein Trägermaterial, insbesondere ein Fasermaterial,
b) mindestens ein härtbares Epoxidharz und/ oder härtbares Polyurethanharz und
c) mindestens einen flüssigen Härter gemäß mindestens einem der vorgenannten Ansprüche 1 bis 7.

11. Verwendung von flüssigen Härtern gemäß mindestens einem der vorgenannten Ansprüche 1 bis 7 zur Härtung von Zusammensetzungen umfassend mindestens ein härtbares Epoxidharz und/ oder härtbares Polyurethanharz.

12. Verwendung von flüssigen Härtern gemäß mindestens einem der vorgenannten Ansprüche 1 bis 7 zur Härtung von imprägnierten Fasermaterialien oder imprägnierten Geweben, Gewirken oder Geflechten.

## Claims

1. Liquid hardeners for hardening curing polymer resins, in particular epoxy resins, including
a) cyanamide;
b) at least one urea derivative of the formula (I) or formula (II) 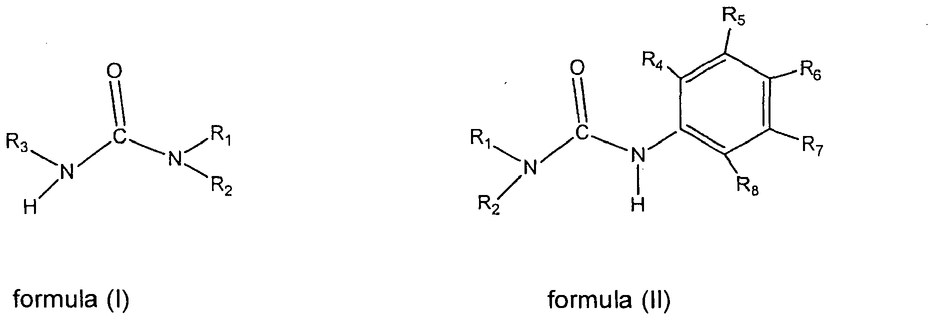 wherein the following applies to the radicals, in each case simultaneously or independently of one another:
R^{1,} R² = simultaneously or independently of one another hydrogen, C1- to C15-alkyl, C3- to C15-cycloalkyl or together form a ring of C3- to C10-alkyls;
R³ = hydrogen, C1- to C15-alkyl, C3- to C15-cycloalkyl, aryl, arylalkyl,
- NHC(O)NR¹R²-substituted C1- to C15-alkyl,
- NHC(O)NR¹R²-substituted C3- to C15-cycloalkyl,
- NHC(O)NR¹R²-substituted aryl or
- NHC(O)NR¹R²-substituted arylalkyl;
R⁴, R⁵, R⁶, R⁷, R⁸ = simultaneously or independently of one another hydrogen, halogen, C1- to C15-alkyl, C3- to C15-cycloalkyl, aryl, arylalkyl,
- CF₃ ,-NHC(O)NR¹R²,
- NHC(O)NR¹R²-substituted C1- to C15-alkyl,
- NHC(O)NR¹R²-substituted aryl or
- NHC(O)NR¹R²-substituted arylalkyl; and c) at least one stabiliser selected from the group comprising inorganic or organic acids.

2. Liquid hardeners according to Claim 1, **characterised in that** the hardeners include cyanamide and at least one urea derivative of the formula (I) or formula (II) in a molar ratio of cyanamide : urea derivative or urea derivative mixture of 1 : 1 to 4 : 1.

3. Liquid hardeners according to Claim 1 or 2, **characterised in that** the hardener, besides cyanamide, at least one urea derivative and the stabiliser, includes no solvents or solubilisers or is free of solvents or solubilisers.

4. Liquid hardeners according to at least one of the preceding claims, **characterised in that** the hardener includes at least two different urea derivatives.

5. A liquid hardener according to at least one of the preceding claims, **characterised in that** the hardener includes a urea derivative of the formula (I), wherein the following applies to the radicals, in each case simultaneously or independently of one another:
R¹ and R² = hydrogen, C1- to C15-alkyl;
R³ = hydrogen, C1- to C15-alkyl, C3- to C15-cycloalkyl,
- NHC(O)NR¹R²-substituted C1- to C15-alkyl,
- NHC(O)NR¹R²-substituted C3- to C15-cycloalkyl, or
- NHC(O)NR¹R²-substituted aryl.

6. A liquid hardener according to at least one of the preceding claims, **characterised in that** the hardener comprises a) cyanamide, b) a urea derivative selected from the group comprising urea, 1,1-dimethylurea, 3-(3-chloro-4-methylphenyl)-1,1-dimethylurea, 3-(p-chlorophenyl)-1,1-dimethylurea, 3-phenyl-1,1-dimethylurea, 3-(3,4-dichlorophenyl)-1,1-dimethylurea, 1,1'-(methylene-di-p-phenylene)-bis-(3,3-dimethylurea), 3-(3-trifluoromethylphenyl)-1,1-dimethylurea, 1,1'-(2-methyl-m-phenylene)-bis-(3,3-dimethylurea) and/or 1,1'-(4-methyl-m-phenylene)-bis-(3,3-dimethylurea), and c) at least one stabiliser selected from the group comprising inorganic or organic acids.

7. A liquid hardener according to at least one of the preceding claims, **characterised in that** there is used as the inorganic or organic acid an acid selected from the group comprising salicylic acid, phthalic acid, toluene sulfonic acid, sulfuric acid, phosphoric acid or anhydrides thereof or mixtures of these.

8. An epoxy resin composition including
a) at least one curing epoxy resin and
b) at least one liquid hardener according to at least one of the preceding Claims 1 to 7.

9. A polyurethane resin composition including
a) at least one curing polyurethane resin and
b) at least one liquid hardener according to at least one of the preceding Claims 1 to 7.

10. A composite material including
a) a support material, in particular a fibre material,
b) at least one curing epoxy resin and/or curing polyurethane resin, and
c) at least one liquid hardener according to at least one of the preceding Claims 1 to 7.

11. Use of liquid hardeners according to at least one of the preceding Claims 1 to 7 for hardening compositions including at least one curing epoxy resin and/or curing polyurethane resin.

12. Use of liquid hardeners according to at least one of the preceding Claims 1 to 7 for hardening impregnated fibre materials or impregnated woven fabrics, knitted fabrics or braiding.

## Revendications

1. Durcisseurs liquides pour le durcissement de résines polymères durcissables, en particulier de résines époxydes, comprenant
a) une cyanamide et
b) au moins un dérivé d'urée de la formule (I) ou de la formule (II) 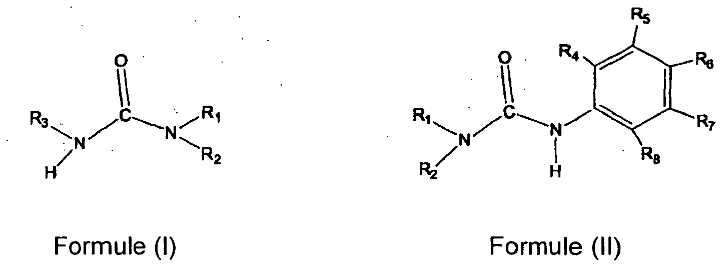 dans lesquelles les radicaux possèdent chacun une valeur simultanément ou indépendamment les uns des autres:
R¹, R² = simultanément ou indépendamment l'un de l'autre, l'hydrogène, un alkyle en C₁ à C₁₅, un cycloalkyle en C₃ à C₁₅ ou ensemble, avec formation d'un noyau, un alkylène en C₃ à C₁₀;
R³ = l'hydrogène, un alkyle en C₁ à C₁₅, un cycloalkyle en C₃ à C₁₅, un aryle, un arylalkyle, un alkyle en C₁ à C₁₅ substitué par -NHC(O)NR¹R², un cycloalkyle en C₃ à C₁₅ substitué par -NHC(O)NR¹R²,
un aryle substitué par -NHC(O)NR¹R², ou un arylalkyle substitué par -NHC(O)NR¹R²;
R⁴, R⁵, R⁶, R⁷, R⁸ = simultanément ou indépendamment les uns des autres, l'hydrogène, un halogène, un alkyle en C₁ à C₁₅, un cycloalkyle en C₃ à C₁₅, un aryle, un arylalkyle, -CF₃, -NHC(O)NR¹R²,
un alkyle en C₁ à C₁₅ substitué par -NHC(O)NR¹R², un aryle substitué par -NHC(O)NR¹R² ou
un arylalkyle substitué par -NHC(O)NR¹R²;
et c) au moins une stabilisant choisi parmi le groupe des acides inorganiques ou organiques.

2. Durcisseurs liquides selon la revendication 1, **caractérisés en ce que** les durcisseurs comprennent une cyanamide et au moins un dérivé d'urée de la formule (I) ou de la formule (II), dans un rapport molaire entre la cyanamide et le dérivé d'urée ou mélange de dérivés d'urée de 1:1 à 4:1.

3. Durcisseurs liquides selon la revendication1 ou 2, **caractérisés en ce que** le durcisseur en dehors d'une cyanamide, d'au moins un dérivé d'urée et du stabilisant ne contient pas de solvant ou d'agent de solubilisation ou est exempt de solvant ou d'agent de solubilisation.

4. Durcisseurs liquides selon au moins une des revendications précédentes, **caractérisés en ce que** le durcisseur comprend au moins deux dérivés d'urée différents.

5. Durcisseur liquide selon au moins une des revendications précédentes, **caractérisé en ce que** le durcisseur comprend un dérivé d'urée de la formule (I), dans le quel pour les radicaux possédant chacun simultanément ou indépendamment les uns des autres, prévaut
R¹, R² = l'hydrogène, un alkyle en C₁ à C₁₅;
R³ = l'hydrogène, un alkyle en C₁ à C₁₅, un cycloalkyle en C₃ à
C₁₅,
un alkyle en C₁ à C₁₅ substitué par -NHC(O)NR¹R²,
un cycloalkyle en C₃ à C₁₅ substitué par -NHC(O)NR¹R², ou
un aryle substitué par -NHC(O)NR¹R²

6. Durcisseur liquide selon une des revendications précédentes, **caractérisé en ce que** le durcisseur comprend a) une cyanamide, b) un dérivé d'urée choisi parmi le groupe urée, 1,1-diméthylurée, 3-(3-chlor-4-méthylphényl)-1,1-diméthylurée, 3-(p-chlorphényl)-1,1-diméthylurée, 3-phényl-1,1-diméthylurée, 3-(3,4-dichlorphényl)-1,1-diméthylurée, 1,1'-(méthylène-di-p-phénylène)-bis-(3,3-diméthylurée), 3-(3-trifluorométhylphényl)1,1-diméthylurée, 1,1'-(2-méthyl-m-phénylène)-bis-(3,3-diméthylurée) et/ou 1,1'-(4-méthyl-m-phénylène)-bis-(3,3-diméthylurée) et c) au moins un stabilisant choisi parmi le groupe des acides inorganiques ou organiques.

7. Durcisseur liquide selon au moins une des revendications précédentes, **caractérisé en ce que** comme acide inorganique ou organique, un acide choisi parmi le groupe de l'acide salicylique, de l'acide phtalique, de l'acide toluènesulfonique, de l'acide sulfurique, de l'acide phosphorique ou de leurs anhydrides ou des mélanges de ceux-ci est utilisé.

8. Composition de résine époxyde comprenant
a) au moins une résine époxyde durcissable et
b) au moins un durcisseur liquide selon au moins une des revendications 1 à 7 précédentes.

9. Composition de résine polyuréthane comprenant
a) au moins une résine polyuréthane durcissable et
b) au moins un durcisseur liquide selon au moins une des revendications 1 à 7 précédentes.

10. Matériau composite comprenant
a) un matériau de support, en particulier un matériau à base de fibres,
b) au moins une résine époxyde durcissable et/ou une résine polyuréthane durcissable et
c) au moins un durcisseur liquide selon au moins une des revendications 1 à 7 précédentes.

11. Utilisation de durcisseurs liquides selon au moins une des revendications 1 à 7 précédentes pour le durcissement de compositions comprenant au moins une résine époxyde durcissable et/ou une résine polyuréthane durcissable.

12. Utilisation de durcisseurs liquides selon au moins une des revendications 1 à 7 précédentes pour le durcissement de matériaux à base de fibres imprégnés ou de tissus, de maillages ou d'entrelacements imprégnés.
